# EUROPEAN PATENT APPLICATION

(11) **EP 4 851 955 A1**
(43) Date of publication of application: **09.12.2026**
(21) Application number: 25853631.7
(22) Date of filing: 18.06.2025
(51) Int. Cl.: G06V 20/40

(54) **VIDEO TAG RECOGNITION METHOD AND APPARATUS, AND MODEL TRAINING METHOD AND APPARATUS, DEVICE, AND MEDIUM**

(30) Priority: 12.08.2024 CN 202411098346
(71) Applicant: Tencent Technology (Shenzhen) Company Limited, Shenzhen, Guangdong 518057 (CN)
(72) Inventor: CHEN, Shizhe, Shenzhen, Guangdong 518057 (CN)
(74) Representative: EP&C
(86) International application number: PCT/CN2025/101658
(87) International publication number: WO 2026/036899

(57) **Abstract**

A video tag recognition method, executed by an electronic device and comprising : by means of a video tag recognition model, respectively encoding video frames in a video to be recognized, to construct a global feature set comprising global features of the video frames obtained by encoding, and a local feature set comprising local features of the video frames obtained by encoding; on the basis of a feature similarity between the global features in the global feature set, compressing the global feature set to obtain a sequence of global features of a preset storage quantity; and on the basis of a feature similarity between the local features in the local feature set, compressing the local feature set to obtain a sequence of local features of a preset storage quantity (S91); concatenating a global query feature and a local query feature obtained by pre-training, and then using a self-attention mechanism to extract a self-attention feature, wherein the global query feature and the local query feature are obtained by training learnable query features on the basis of a sample video, and the self-attention feature fuses key information in the global query feature and the local query feature (S92); using a cross-attention mechanism to respectively extract a first cross-attention feature between the self-attention feature and each global feature in the global feature sequence, and to respectively extract a second cross-attention feature between the self-attention feature and each local feature in the local feature sequence (S93); and on the basis of the obtained first cross-attention features and second cross-attention features, recognizing a video tag of the video to be recognized (S94).

## Description

### RELATED APPLICATION

This application claims priority to Chinese Patent Application No. 202411098346.X, entitled "VIDEO TAG RECOGNITION METHOD AND APPARATUS, MODEL TRAINING METHOD AND APPARATUS, DEVICE, AND MEDIUM" filed on August 12, 2024, which is incorporated herein by reference in its entirety.

### FIELD OF THE TECHNOLOGY

The present disclosure relates to the field of video processing technology, and in particular, to a video tag recognition method and apparatus, a model training method and apparatus, a device, and a medium.

### BACKGROUND OF THE DISCLOSURE

Video tag recognition is an important part of video content features. Automatically generating tags for vast quantities of videos by machines can provide video content features at different levels of granularity to downstream content distribution pipeline. This improves the efficiency of content distribution, while significantly reducing the cost of manual content review.

Taking short videos as an example, a video generally has a duration of no more than 30 seconds and has relatively few video frames. Therefore, after sparse frame sampling, visual tokens of each image can be extracted and concatenated for input into a large language model (LLM), which is used to recognize tags of the short video.

However, for media such as medium-length videos, long-form videos, or video streams (e.g., live streaming scenarios), the video duration often far exceeds 30 seconds, reaching tens of minutes or even several hours, and a total number of video frames is far greater than that of a short video. If sparse frame sampling (e.g., uniformly extracting N frames at equal intervals) is still used, extracted visual tokens cannot cover most of video contents, making it difficult to ensure an accuracy and a recall of video tag recognition.

Thus, developing an efficient and accurate approach for recognizing tags in medium-length videos, long-form videos, and video streams remains an urgent challenge..

### SUMMARY

Embodiments of the present disclosure provide a video tag recognition method and apparatus, a model training method and apparatus, a device, and a medium.

According to a first aspect, an embodiment of the present disclosure provides a video tag recognition method, executed by an electronic device, the method including:
encoding, using a video tag recognition model, each video frame in a video to be recognized respectively to construct a global feature set including global features of video frames obtained by the encoding, and a local feature set including local features of the video frames obtained by the encoding;
compressing, based on a feature similarity between the global features in the global feature set, the global feature set to obtain a global feature sequence of a preset storage quantity; and compressing, based on a feature similarity between the local features in the local feature set, the local feature set to obtain a local feature sequence of a preset storage quantity;
concatenating a global query feature and a local query feature, and then extracting a self-attention feature using a self-attention mechanism, the global query feature and the local query feature being obtained by training learnable query features based on a sample video; and the self-attention feature fusing key information in the global query feature and the local query feature;
extracting, using a cross-attention mechanism, a first cross-attention feature between the self-attention feature and each global feature in the global feature sequence, and a second cross-attention feature between the self-attention feature and each local feature in the local feature sequence respectively; and
recognizing, based on obtained first cross-attention features and second cross-attention features, a video tag of the video to be recognized.

According to a second aspect, an embodiment of the present disclosure provides a method for training a video tag recognition model, executed by an electronic device, the method including:
encoding, by way of a video tag recognition model to be trained, each video frame in a sample video respectively to construct a global feature set including global features of video frames obtained by the encoding, and a local feature set including local features of the video frames obtained by the encoding; compressing, based on a feature similarity between the global features in the global feature set, the global feature set to obtain a global feature sequence of a preset storage quantity; and compressing, based on a feature similarity between the local features in the local feature set, the local feature set to obtain a local feature sequence of a preset storage quantity;
concatenating a first learnable query feature to be trained and a second learnable query feature to be trained, and then extracting a self-attention feature using a self-attention mechanism, the self-attention feature fusing key information in the first learnable query feature and the second learnable query feature;
extracting, using a cross-attention mechanism, a first cross-attention feature between the self-attention feature and each global feature in the global feature sequence, and a second cross-attention feature between the self-attention feature and each local feature in the local feature sequence respectively; and
adjusting, based on a difference between a video tag and video text description information of the sample video predicted based on obtained first cross-attention features and second cross-attention features, and corresponding sample labels, parameters of the video tag recognition model, a trained video tag recognition model being configured to extract a video tag of a video to be recognized.

According to a third aspect, an embodiment of the present disclosure provides a video tag recognition apparatus, including:
an encoding and compression module, configured to encode, by way of a video tag recognition model, each video frame in a video to be recognized respectively to construct a global feature set including global features of video frames obtained by the encoding, and a local feature set including local features of the video frames obtained by the encoding; compress, based on a feature similarity between the global features in the global feature set, the global feature set to obtain a global feature sequence of a preset storage quantity; and compress, based on a feature similarity between the local features in the local feature set, the local feature set to obtain a local feature sequence of a preset storage quantity;
a fusion module, configured to concatenate a global query feature and a local query feature, and then extract a self-attention feature using a self-attention mechanism, the global query feature and the local query feature being obtained by training learnable query features based on a sample video; and the self-attention feature fusing key information in the global query feature and the local query feature;
a cross-compression module, configured to extract, using a cross-attention mechanism, a first cross-attention feature between the self-attention feature and each global feature in the global feature sequence, and a second cross-attention feature between the self-attention feature and each local feature in the local feature sequence respectively; and
a tag recognition module, configured to: recognize, based on obtained first cross-attention features and second cross-attention features, a video tag of the video to be recognized.

According to a fourth aspect, an embodiment of the present disclosure provides a video tag recognition apparatus, including:
a first feature extraction module, configured to encode, by way of a video tag recognition model to be trained, each video frame in a sample video respectively to construct a global feature set including global features of video frames obtained by the encoding, and a local feature set including local features of the video frames obtained by the encoding; compress, based on a feature similarity between the global features in the global feature set, the global feature set to obtain a global feature sequence of a preset storage quantity; and compress, based on a feature similarity between the local features in the local feature set, the local feature set to obtain a local feature sequence of a preset storage quantity;
a second feature extraction module, configured to concatenate a first learnable query feature to be trained and a second learnable query feature to be trained, and then extract a self-attention feature using a self-attention mechanism, the self-attention feature fusing key information in the first learnable query feature and the second learnable query feature;
a third feature extraction module, configured to extract, using a cross-attention mechanism, a first cross-attention feature between the self-attention feature and each global feature in the global feature sequence, and a second cross-attention feature between the self-attention feature and each local feature in the local feature sequence respectively; and
a parameter adjustment module, configured to adjust, based on a difference between a video tag and video text description information of the sample video predicted based on obtained first cross-attention features and second cross-attention features, and corresponding sample labels, parameters of the video tag recognition model, a trained video tag recognition model being configured to extract a video tag of a video to be recognized.

According to a fifth aspect, an embodiment of the present disclosure provides an electronic device, including a processor and a memory, the memory having a computer program stored therein, the computer program, when executed by the processor, causing the processor to perform operations of any video tag recognition method described above.

According to a sixth aspect, an embodiment of the present disclosure provides a computer-readable storage medium, including a computer program, the computer program, when run on an electronic device, causing the electronic device to perform operations of any video tag recognition method described above.

According to a seventh aspect, an embodiment of the present disclosure provides a computer program product, including a computer program, the computer program being stored in a computer-readable storage medium; and when a processor of an electronic device reads the computer program from the computer-readable storage medium, the processor executing the computer program, causing the electronic device to perform operations of any video tag recognition method described above.

Other features and advantages of the present disclosure will be set forth in the description that follows, and in part will become apparent from the description, or may be understood by practicing the present disclosure. The objectives and other advantages of the present disclosure may be realized and attained by structures particularly pointed out in the written description, claims, and accompanying drawings.

### BRIEF DESCRIPTION OF THE DRAWINGS

To describe technical solutions in embodiments of the present disclosure more clearly, the following briefly introduces accompanying drawings required for describing the embodiments. Apparently, the accompanying drawings in the following description show merely some embodiments of the present disclosure, and a person of ordinary skill in the art may further derive other drawings from these accompanying drawings without creative efforts.
FIG. 1 is a schematic diagram of an exemplary application scenario according to an embodiment of the present disclosure.
FIG. 2 is a schematic flowchart of application on a content distribution product side according to an embodiment of the present disclosure.
FIG. 3 is an implementation flowchart of a video tag recognition method according to an embodiment of the present disclosure.
FIG. 4 is a schematic structural diagram of a video tag recognition model according to an embodiment of the present disclosure.
FIG. 5 is a schematic structural diagram of a query transformer according to an embodiment of the present disclosure.
FIG. 6 is a schematic diagram of a staged training process of a video tag recognition model according to an embodiment of the present disclosure.
FIG. 7 is a schematic diagram of a model parameter update according to an embodiment of the present disclosure.
FIG. 8 is a schematic diagram of another model parameter update according to an embodiment of the present disclosure.
FIG. 9 is an implementation flowchart of a video tag recognition method according to an embodiment of the present disclosure.
FIG. 10 is a schematic diagram of image patching according to an embodiment of the present disclosure.
FIG. 11 is a schematic diagram of a global feature compression process according to an embodiment of the present disclosure.
FIG. 12 is a schematic diagram of a computation process of an attention mechanism according to an embodiment of the present disclosure.
FIG. 13 is a schematic diagram of a video tag extraction process according to an embodiment of the present disclosure.
FIG. 14 is a schematic diagram of an interaction logic between a terminal device and a server according to an embodiment of the present disclosure.
FIG. 15 is a schematic structural diagram of a video tag recognition apparatus according to an embodiment of the present disclosure.
FIG. 16 is a schematic structural diagram of an apparatus for training a video tag recognition model according to an embodiment of the present disclosure.
FIG. 17 is a schematic diagram of a hardware composition structure of an electronic device according to an embodiment of the present disclosure.
FIG. 18 is a schematic diagram of a hardware composition structure of another electronic device according to an embodiment of the present disclosure.

### DESCRIPTION OF EMBODIMENTS

The technical solutions in embodiments of the present disclosure will be clearly and completely described in the following with reference to accompanying drawings in the embodiments of the present disclosure. Apparently, the described embodiments are merely some rather than all of the embodiments of the present disclosure. All other embodiments obtained by a person of ordinary skill in the art based on the embodiments of the present disclosure without creative efforts shall fall within the protection scope of the present disclosure.

Some concepts/terms involved in the embodiments of the present disclosure are introduced below.

Large Language Model (LLM): A model that learns statistical rules and semantic information of a language by training on a large amount of text data, thereby being capable of predicting a next word or sentence. LLMs have a wide range of applications in the field of natural language processing (NLP), such as machine translation, speech recognition, and text generation. An LLM may employ different training strategies and model structures, such as pre-training and fine-tuning. Pre-training refers to large-scale training of a model in an unsupervised or self-supervised mode, enabling the model to have general understanding and expression capabilities for language data. Fine-tuning refers to optimizing, based on a pre-trained model and through supervised learning, the model for a specific application scenario or task. LLMs have achieved remarkable results in tasks such as language understanding, generation, and translation, and as model scales continue to expand and training data increases, their performance and application scope are also continuously expanding.

Multimodal large language model (MLLM): Based on an LLM, a multimodal large language model integrates media data of other modalities (e.g., images, videos, audio, etc.), enabling the model to simultaneously process information of different modalities, better understand and express semantics, thereby improving the effectiveness and accuracy of applications. A video tag recognition model in the embodiments of the present disclosure is an example of an MLLM, which, based on an LLM, integrates media data of a video modality.

Global query feature and local query feature: These are obtained by training corresponding learnable query features based on a sample video, and may be in the form of vectors. Specifically, a global query feature is obtained by training a first learnable query feature and corresponds to a global feature, and a local query feature is obtained by training a second learnable query feature and corresponds to a local feature. The first learnable query feature and the second learnable query feature herein refer to query vectors that can be learned and adjusted through a training process.

Transformer: A network structure model suitable for processing sequence data, which adopts a full-attention structure to replace traditional recurrent neural networks (RNNs) or convolutional neural networks (CNNs) Its core idea is to model a relationship between each element in an input sequence and other elements as an attention weight matrix, and compute a representation of each element through a self-attention mechanism. This structure enables the transformer to have a strong capability in capturing long-range dependencies in sequences, thereby achieving good performance in NLP tasks. Transformer models have a very wide range of applications in the NLP field, including tasks such as machine translation, text summarization, and question-answering systems. The transformer introduced the self-attention mechanism for the first time, and has surpassed traditional sequence-to-sequence (Seq2Seq) models, such as long short-term memory (LSTM) and gated recurrent unit (GRU), in many aspects. The success of the transformer has also spawned many variant models based on the self-attention mechanism, such as bidirectional encoder representations from transformers (BERT) and generative pre-trained transformer (GPT), which have made remarkable progress in NLP tasks.

Query transformer: A query transformer is configured to perform feature fusion and compression based on a self-attention mechanism and a cross-attention mechanism. The query transformer has a structure of a multi-layer decoder, and uses two learnable query features to further compress and fuse global features and local features, obtaining a shorter visual token sequence. Specifically, in each decoder, a self-attention network is used, so that a global feature query sequence and a local feature query sequence can "see" each other, enabling interaction between the two types of features. Then, two parallel cross-attention networks are used to process the global features and the local features respectively. In a multi-layer stacked decoder structure, between each layer, the global features and the local features are fused through self-attention, and further compressed through cross-attention, resulting in a more compact visual token sequence.

A visual token refers to a basic unit or a smallest processable unit in a video, and is a basic unit used by a video tag recognition model when processing a video, corresponding to a text token in a Transformer. A text token is a word or a subword in a text.

Memory Bank (MB): A module configured to store and compress video features. Herein, the memory bank is divided into a global memory unit (or global memory bank) and a local memory unit (or local memory bank). The global memory bank is configured to store and compress global features of a video frame sequence, and the local memory bank is configured to store and compress local features of a video frame sequence. A compression mode is not specifically limited herein.

The design concept of the embodiments of the present disclosure is briefly introduced below.

With a rapid advancement of information technology, especially the vigorous development of artificial intelligence technology, a demand for video data analysis is increasingly growing. Video tag recognition is an important part of video content features. Automatically generating tags for a large number of videos by machines can provide video content features at different granularities for downstream content distribution links (e.g., recommendation systems, content operations, etc.), improve an efficiency of content distribution, and at the same time significantly reduce costs of manual content review.

In general, MLLMs are often used to solve text + image/video content understanding tasks, in which visual features are a key modal feature. For an image, it is only necessary to convert image patch features into tokens for processing (a number of tokens is controllable). A short video is generally no longer than 30 seconds, and can basically follow this framework. A common method is to perform sparse frame sampling, extract visual tokens from each image, then concatenate the tokens and input them into an LLM.

However, for media such as medium-length videos, long-form videos, or video streams (e.g., live streaming scenes), a video duration far exceeds 30 seconds, reaching tens of minutes or even hours. If sparse frame sampling is still used, the visual tokens cannot cover most of the video content, and the model cannot see the complete video content, making it difficult to ensure an accuracy and a recall of content tags.

In addition, if the above framework is still followed, in order for the model to see a sufficiently long-form video content, the value of N has to be set very large, causing a number of visual tokens to reach the order of thousands or even larger. This is infeasible for both offline model training and online deployment.

Embodiments of the present disclosure provide a video tag recognition method and apparatus, a model training method and apparatus, a device, and a medium. According to the present disclosure, when extracting visual features of a video to be recognized (hereinafter referred to as a video) through a video tag recognition model, frame sampling is not performed. Instead, each video frame in the video to be recognized is encoded. After encoding, a global feature set including global features of the video frames and a local feature set including local features of the video frames can be obtained. On this basis, based on feature similarity, the obtained global feature set and local feature set are compressed respectively. Specifically, global features of some video frames are fused, and local features of some video frames are fused, to obtain a global feature sequence and a local feature sequence of a preset storage quantity. Through the above operations, it can be ensured that global feature sequences and local feature sequences at this time can cover most of the content of the video to be recognized. On this basis, key information in the global query feature and the local query feature is fused through a self-attention mechanism, which is then further compressed through a cross-attention mechanism, resulting in a more compact visual feature sequence.

The above approach can effectively compress visual features of medium-length videos and long-form videos, reduce information loss, and at the same time improve tag recognition efficiency by compressing features, thereby achieving efficient and accurate recognition of video tags of medium-length videos and long-form videos.

Exemplary embodiments of the present disclosure are described below with reference to the accompanying drawings of the description. The exemplary embodiments described herein are merely for illustrating and explaining the present disclosure, and are not intended to limit the present disclosure. In addition, the embodiments of the present disclosure and features in the embodiments may be combined with each other provided that there is no conflict.

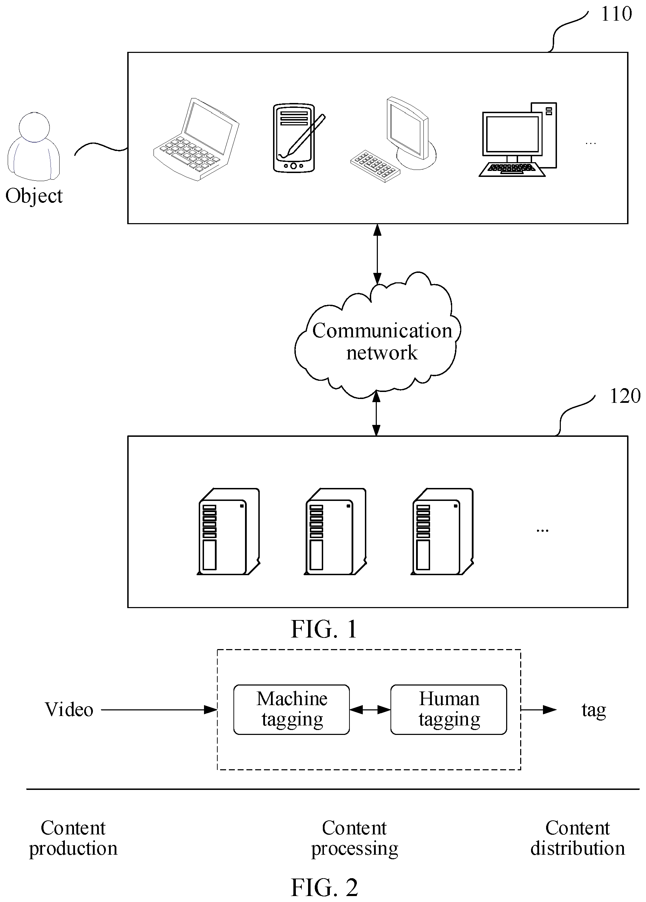

As shown in FIG. 1, the figure is a schematic diagram of an application scenario according to an embodiment of the present disclosure. The application scenario diagram includes two terminal devices 110 and a server 120.

In the embodiments of the present disclosure including the embodiments of both the claims and the specification (hereinafter referred to as "all embodiments of the present disclosure"), the terminal device 110 includes, but is not limited to, a mobile phone, a tablet computer, a laptop computer, a desktop computer, an e-book reader, an intelligent voice interaction device, an intelligent household appliance, a vehicle-mounted terminal, and other devices. A client related to video tag recognition may be installed on the terminal device. The client may be software (e.g., a browser, content distribution software, video software, etc.), or may be a web page, an applet, etc. The server 120 is a backend server corresponding to the software or the web page or the applet, etc., or a server dedicated to performing video tag recognition, which is not specifically limited in the present disclosure. The server 120 may be an independent physical server, or may be a server cluster including a plurality of physical servers or a distributed system, or may be a cloud server that provides basic cloud computing services such as a cloud service, a cloud database, cloud computing, a cloud function, cloud storage, a network service, cloud communication, a middleware service, a domain name service, a security service, a content delivery network (CDN), big data, and an artificial intelligence platform.

The video tag recognition method in all embodiments of the present disclosure may be executed by an electronic device. The electronic device may be the terminal device 110 or the server 120. That is, the method may be executed solely by the terminal device 110 or the server 120, or may be executed jointly by the terminal device 110 and the server 120.

For example, when the method is executed jointly by the terminal device 110 and the server 120, a client related to video tag recognition may be installed on the terminal device 110. A user may determine, based on the client, a video to be recognized, and transmit the video to be recognized to the server 120 through the terminal device 110. The server 120 side has a pre-deployed trained video tag recognition model. Then, the server 120 uses the video tag recognition method according to the embodiments of the present disclosure to recognize, based on the video tag recognition model, a video tag of the video to be recognized, and finally returns a recognized video tag to the terminal device 110, so that the terminal device 110 presents the video tag to the user through the client. A specific recognition process on the server 120 side is as follows:

encoding, using a video tag recognition model, each video frame in a video to be recognized respectively to construct a global feature set including global features of video frames obtained by the encoding, and a local feature set including local features of the video frames obtained by the encoding; compressing, based on a feature similarity between the global features in the global feature set, the global feature set to obtain a global feature sequence of a preset storage quantity; and compressing, based on a feature similarity between the local features in the local feature set, the local feature set to obtain a local feature sequence of a preset storage quantity; concatenating a global query feature and a local query feature (obtained by pre-training), and extracting a self-attention feature using a self-attention mechanism, the global query feature and the local query feature being obtained by training learnable query features based on a sample video, and the self-attention feature fusing key information in the global query feature and the local query feature; extracting, using a cross-attention mechanism, a first cross-attention feature between the self-attention feature and each global feature in the global feature sequence, and a second cross-attention feature between the self-attention feature and each local feature in the local feature sequence respectively; and recognizing, based on obtained first cross-attention features and second cross-attention features, a video tag of the video to be recognized.

The above implementations are merely simple examples. Other implementations are also applicable to all embodiments of the present disclosure, which will not be described one by one herein.

In an exemplary implementation, the terminal device 110 and the server 120 may communicate with each other through a communication network.

In an exemplary implementation, the communication network is a wired network or a wireless network.

FIG. 1 is only an example for illustration. In practice, the numbers of terminal devices and servers are not limited, and are not specifically limited in all embodiments of the present disclosure.

In all embodiments of the present disclosure, when a plurality of servers are provided, the plurality of servers may form a blockchain, and the servers serve as nodes on the blockchain. The video-related data involved in the video tag recognition method disclosed in all embodiments of the present disclosure may be stored on the blockchain, for example, video features of the video to be recognized, relevant features extracted for the video to be recognized, video tags, model parameters of the video tag recognition model, etc.

In addition, all embodiments of the present disclosure may be applied to various scenarios, including but not limited to cloud technology, artificial intelligence, smart transportation, assisted driving, and the like.

Specifically, video tag recognition technology analyzes video content through deep learning and computer vision algorithms, extracts key features, and performs tagging. This enables unstructured video data to be processed in a structured mode, and thus applied to multiple fields. For example, video tag recognition may be used in scenarios such as content classification, intelligent recommendation, video search, and summary generation, improving the organization and utilization efficiency of video data. Several specific application scenario examples are provided below:
(i) Content classification: A video platform may use the video tag recognition method in the present disclosure to automatically add metadata tags to uploaded videos, helping users quickly find content of interest. For example, a video containing a football match may be tagged with tags such as "football," "sports event," and "goal," so that the video can be categorized under corresponding categories.
(ii) Intelligent recommendation system: A streaming service provider may use the video tag recognition method in the present disclosure to understand video content, and recommend similar or related videos to users based on their viewing history and preferences. For example, if a user frequently watches science fiction movies, the system may recognize this tendency and recommend more movies tagged with "science fiction," so as to improve viewing experience, promote content consumption, enhance user stickiness, and achieve personalized content distribution.
   Referring to FIG. 2, which is a schematic flowchart of application on a content distribution product side according to an embodiment of the present disclosure. A video enters a content processing link from a content production stage, undergoes human-machine collaboration to obtain corresponding content features, and enters a downstream content distribution stage. Specifically, in the content processing process for a video, tagging may be performed on the video based on a collaboration of machine tagging and human tagging, i.e., adding corresponding video tags to the video. The video tag recognition method in the present disclosure belongs to the machine tagging stage in this process.
(iii) Video search and summary generation: In a large-scale video database, a user can search, by using keywords, for video clips containing specific elements. In addition, tag recognition can also be configured to automatically generate video summaries, highlighting key scenes or events in a video, such as news highlights and movie clips.

Besides the above scenarios, video tag recognition can also be applied to the following:
(iv) Advertisement targeting: A media company may use video tags to accurately place advertisements, ensuring that the advertisements are relevant to the video content, thereby improving advertisement effectiveness, for example, playing a sports brand advertisement during a sports event video.
(v) Copyright protection and content review: Using the video tag recognition method in the present disclosure may help a content platform detect and prevent copyright infringement, for example, identifying unauthorized use of copyrighted music or images. At the same time, it is also used to review video content and automatically filter inappropriate or violating content, such as violence and gore. These applications not only improve the efficiency of video data management and distribution, but also enhance user experience and platform security.

The application scenarios listed above are merely simple examples. Besides these, other application scenarios are also applicable to the embodiments of the present disclosure, which will not be described one by one herein.

In addition, it needs to be emphasized that in the specific implementations of the present disclosure, the video-related data involved includes, for example, the video to be recognized for tag recognition, the user's viewing history and preferences, as listed above. When the above embodiments of the present disclosure are applied to a specific product or technology, user permission or consent is required, and the collection, use, and processing of relevant data need to comply with relevant laws, regulations, and standards of relevant countries and regions.

The video tag recognition method provided by the exemplary implementations of the present disclosure is described below with reference to the accompanying drawings in conjunction with the application scenarios described above. The above application scenarios are merely shown for facilitating understanding of the spirit and principles of the present disclosure, and the implementations of the present disclosure are not limited in this aspect.

The solutions provided by all embodiments of the present disclosure mainly relate to the application of artificial intelligence in video tag recognition. When performing video tag recognition, a deep learning-based artificial neural network model needs to be used. That is, all embodiments of the present disclosure obtain a video tag recognition model by combining machine learning and a video detection architecture-related method. The query transformer, LLM, etc. in the video tag recognition model are obtained through domain-adaptive training based on machine learning methods. Then, in actual scenarios, the video tag recognition model can achieve the purpose of tag recognition for a video to be recognized.

Specifically, the video tag recognition process in all embodiments of the present disclosure may be divided into two parts, including a training part and an application part. The training part relates to the technical field of machine learning. In the training part, the embodiments of the present disclosure adopt a staged training method. First, in a first training stage, video text description information of a sample video is used as a sample label to train a query transformer in a video tag recognition model. In a second training stage, a video tag of the sample video is used as a sample label to jointly train the query transformer and an LLM in the video tag recognition model. The application part is configured for performing tag recognition on a video to be recognized using the trained video tag recognition model, and outputting a recognized tag list (including one or more video tags). In addition, the artificial neural network model in all embodiments of the present disclosure may be trained online or offline, which is not specifically limited herein. Herein, description is made by taking offline training as an example.

First, the training process of the video tag recognition model according to the embodiments of the present disclosure is described below.

Before training the video tag recognition model, a training sample set related to videos first needs to be constructed. The training sample set in the embodiments of the present disclosure includes a plurality of training samples. Each training sample includes: a sample video and a sample label corresponding thereto.

The sample video in the model training stage and the video to be recognized in the model application stage in the embodiments of the present disclosure may be any video, specifically various types of videos on a video platform, including live videos and non-live videos. When classified by duration, the non-live video may be a short video, a medium-length video, or a long-form video of any fixed duration, or may be a video stream of any non-fixed duration. When classified by type, the non-live video may be a movie video, a news video, a conference video, an instructional video, a life-sharing video, or the like.

In all embodiments of the present disclosure, the sample label in the embodiments of the present disclosure includes two parts: a video tag of the sample video and video text description information.

The video tag is a keyword or phrase for describing video content, features, or context, and can help a user quickly understand the subject and type of a video. A video may have one or more tags. Specifically, if a video has a plurality of tags, the plurality of tags may cover different aspects thereof.

For example, for an instructional video about baking a cake, its tags may include "baking", "cake", "recipe", "instructional", and "food". These tags not only describe the specific content of the video (baking a cake), but also indicate its function (instructional) and category (food). As another example, a documentary about outdoor exploration may include tags such as "outdoor exploration", "natural scenery", "wildlife", "hiking", "photography skills", "survival skills", "travel guide", and "human geography".

The video text description information may refer to any text information related to a video, and such information may provide additional context or directly describe media content. In all embodiments of the present disclosure, the text modality of the video text description information includes, but is not limited to, some or all of the following:
a video title, description text, key text extracted by optical character recognition (OCR), subtitles or transcriptions generated by automatic speech recognition (ASR), comments and forum discussions, and metadata information.

The description text refers to detailed description below a video or on a video page, and generally includes information such as the subject, purpose, key points, characters, location, etc. of the video. The description text may be provided by a video creator, or may be aggregated from post-editing or viewer comments. The metadata information includes creator information, upload date, etc. Although such data does not directly describe video content, it is crucial for video organization and retrieval.

In addition, through OCR technology, the present disclosure can recognize and extract text information from images in a video, such as text on a poster, text displayed on a screen, a book cover, a menu, a street sign. Such text may provide additional information about a video scene, helping to understand the video content. Through ASR technology, speech in a video can be converted into text, generating subtitles or speech transcriptions. Such text may include not only dialogue content but also descriptions of voiceovers, narrations, and background sounds, providing convenience for hearing-impaired individuals while also helping video search engines understand and index video content.

In all embodiments of the present disclosure, the information of the above text modalities may be aggregated into [video_txt], representing video text description information of a video, which can greatly enrich the understanding and analysis of the video.

In an exemplary implementation, sample labels may be obtained using manual annotation. Considering that manual annotation may be affected by the subjective consciousness of annotators, in order to reduce annotation errors, manual annotation results obtained by a plurality of individuals respectively may be acquired, and the manual annotation results of the plurality of individuals may be combined to obtain the final sample label.

In addition, labeling may also be performed based on historical annotation information of the sample video (e.g., historical tags and titles), or video tags and video text description information detected by other trained models (e.g., LLMs), among others.

In all embodiments of the present disclosure, after a training sample set is acquired, cyclic iterative training may be performed on the video tag model to be trained based on the training sample set, to obtain a trained video tag recognition model. The training process will be briefly described below.

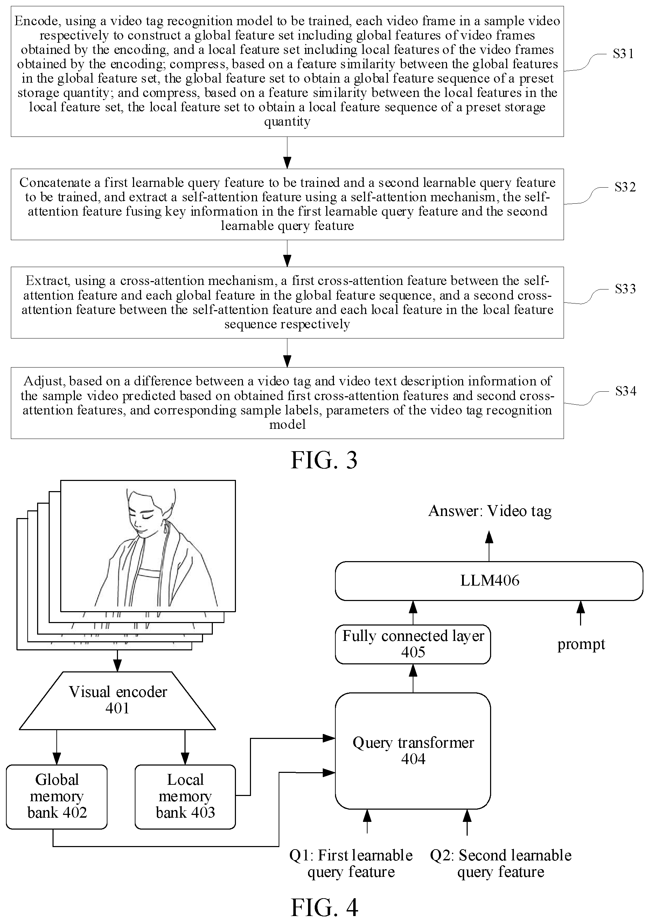

Referring to FIG. 3, which is an implementation flowchart of a video tag recognition method according to an embodiment of the present disclosure, taking an execution entity being a server as an example, the specific implementation process of the method includes the following operations S31 to S34:
S31: Encode, using a video tag recognition model to be trained, each video frame in a sample video respectively to construct a global feature set including global features of video frames obtained by the encoding, and a local feature set including local features of the video frames obtained by the encoding; compress, based on a feature similarity between the global features in the global feature set, the global feature set to obtain a global feature sequence of a preset storage quantity; and compress, based on a feature similarity between the local features in the local feature set, the local feature set to obtain a local feature sequence of a preset storage quantity.

A video frame may be an image of a corresponding frame in a video. Therefore, the video frame may also be referred to as a video frame image, or simply an image. For example, assuming that a video has a frame rate of 30 and a duration of 1 second, the video has a total of 30 frames of images, and the 30 frames of images are all the video frames of the video.

The video tag recognition model in the embodiments of the present disclosure is a multimodal model. Taking an MLLM as an example, an MLLM requires a bridge connecting non-text tokens and an LLM, which converts inputs from different modalities into tokens that can be understood by the LLM. In the present disclosure, this function is implemented based on a query transformer. In all embodiments of the present disclosure, the video tag recognition model in the embodiments of the present disclosure is a retrieval-augmented video tag recognition model, including a visual encoder, a query transformer, and a large language model. The visual encoder is a component of the video tag recognition model, configured to extract global features and local features of a video frame image. It can convert an input video frame image into a visual feature (a column vector). Specifically, an encoding model such as a Vision Transformer (ViT), a convolutional neural network (CNN), a residual network (ResNet), an Inception Network, a Swin Transformer, a MobileNet, and an EfficientNet, may be selected. The query transformer is configured to perform feature fusion and compression based on a self-attention mechanism and a cross-attention mechanism. In addition, the query transformer further includes a fully connected layer for aligning dimensions of a visual feature and a text feature. Finally, a video tag is generated by querying a large language model.

In this process, each local feature corresponds to an image patch in a video frame. The extraction of global features and local features may be implemented by the visual encoder in the video tag recognition model. FIG. 4 is a schematic structural diagram of a video tag recognition model according to an embodiment of the present disclosure. As shown by the visual encoder 401 in FIG. 4, the visual encoder is configured to convert an input video frame image into a visual feature (a column vector). Specifically, a Vision Transformer (ViT), a convolutional neural network (CNN), or other encoding models, such as a residual network (ResNet), an Inception Network, a Swin Transformer, a MobileNet, and an EfficientNet, may be selected.

Specifically, regardless of which encoding model is selected, the extracted features can be divided into two categories: global features and local features.

A global feature refers to an overall representation of a video frame image, and generally includes information such as the macro structure, color distribution, and overall style of the image. The global feature is configured for helping the model understand the overall semantics of an image, for example, identifying whether an image is a landscape, a person, or abstract art.

A local feature refers to a feature of a local region in a video frame image, such as shape, texture, and position information of objects like a human face, a vehicle, and a tree. The local feature is configured for helping the model recognize and locating specific objects in an image. An image patch refers to a relatively small, fixed-size region in an image. In the present disclosure, a video frame image may be pre-divided into N image patches, and local features are extracted at the level of these image patches. Each image patch corresponds to a local feature, reflecting details of a local region of the image.

Specifically, for a ViT, an input image is first divided into a plurality of image patches of a fixed size. Each patch is flattened and linearly projected into an embedding vector, i.e., a patch token. In addition, ViT introduces a special classification token (CLS token), which is placed at the very beginning of the sequence and inputted together with the patch tokens into a transformer encoder. The CLS token does not correspond to any specific image patch. Instead, it interacts with all patch tokens through a self-attention mechanism, gradually aggregating information of the entire image. Finally, its embedding vector (emb) represents a global feature of the image, which may be denoted as f_{glob}, with a size of 1*d. Meanwhile, after passing through the transformer encoder, the embedding vector (emb) of each patch token retains a local feature of a corresponding image region, which may be denoted as f_{loc,i}, with a size of N*d, where N is the number of patches, and i = 1, 2, ..., N.

For a CNN, an average pooling operation is generally located at the end of the network, and its function is to compress each channel of a feature map generated by a previous convolutional layer into a single numerical value. The output vector after this operation aggregates information of the entire input image, and is therefore regarded as a global feature. In contrast, feature maps before average pooling retain spatial structure of the image, and the value at each point corresponds to a feature of a local region of the image. Therefore, these feature maps correspond to local features.

The above uses the ViT and the CNN merely as examples to briefly describe the process of extracting global features and local features of a video frame image. For other networks, the extraction mode is related to their network structure, which will not be described one by one herein.

In all embodiments of the present disclosure, simultaneously extracting global features and local features of a video frame image allows the model to both understand the macro context of the image and capture detailed information, thereby achieving better performance in subsequent tasks.

Considering that the ViT has a good effect in image feature extraction, and in order to simplify the subsequent training process, a trained ViT is used as an example of a visual feature encoder for illustration below, and its parameters are not updated in the subsequent training process. In addition, the visual encoder herein is exemplified by ViT, but may of course be replaced with other network structures, which is not specifically limited herein.

Furthermore, in order to solve the problems in existing technology that it is difficult to ensure the accuracy and recall of video tag recognition due to sparse frame sampling for media such as medium-length videos, long-form videos, or video streams (e.g., live streaming scenes), the present disclosure proposes a method for generating video stream tags based on a memory-enhanced multimodal large language model. Two memory banks (i.e., MB modules), as shown by a global memory bank 402 and a local memory bank 403 in FIG. 4, are introduced to store and compress global features and local features of a video frame sequence, respectively. Therefore, an exemplary implementation is as follows:

storing, each time a video frame is encoded, the global features of the video frame into a global memory bank, and storing the local features of the video frame into a local memory bank; fusing, when a number of global features stored in the global memory bank reaches a preset storage quantity, global features of at least two video frames into a global feature of one video frame based on a feature similarity between the global features stored in the global memory bank and global features of a plurality of groups of video frames among global features to be stored, so as to adjust the global features stored in the global memory bank, so that the number of global features is less than or equal to the preset storage quantity; and performing feature fusion, for each image patch, when a number of corresponding local features stored in the local memory bank reaches the preset storage quantity, on corresponding local features of at least two video frames in the local memory bank based on a feature similarity between the local features in the local memory bank, so that the number of local features stored in the local memory bank is less than or equal to the preset storage quantity.

In all embodiments of the present disclosure, an effect of compressing a video frame sequence is achieved by performing feature fusion on global features or local features. Feature fusion refers to an operation of merging global features of some video frames or merging local features of some video frames. In the present disclosure, when compressing the global feature set based on the feature similarity between the global features in the global feature set, fusion of global features is performed. When compressing the local feature set based on the feature similarity between the local features in the local feature set, fusion of local features is performed. A feature fusion mode includes: performing average pooling on target features of the most similar adjacent video frames based on feature similarity, clustering target features to be stored with target features already stored in a memory bank and performing average pooling on clustered target features of video frames, performing average pooling on target features of consecutive video frames having the longest storage duration, and the like, so as to obtain a global feature sequence and a local feature sequence of a preset storage quantity.

The feature fusion mode may be, for example, compressing adjacent video frames, and clustering a plurality of video frames. For details, reference may be made to the relevant description in the model application stage below, such as compression mode I, compression mode II, and compression mode III described below.

Based on the feature similarity between the global features in the global feature set, the global feature set is compressed to obtain a global feature sequence of a preset storage quantity. The specific compression mode is as follows: each time a video frame is encoded, the global feature of the video frame is stored into a global memory bank; and when the number of global features stored in the global memory bank reaches the preset storage quantity, based on the feature similarity between the global features stored in the global memory bank and the global features of the plurality of groups of video frames among the global features to be stored, compression may be performed in the following mode: first, performing average pooling on the global features of the most similar adjacent video frames in the global memory bank based on the feature similarity; second, clustering, based on the feature similarity, the global features to be stored with the global features already stored in the global memory bank, and performing average pooling on clustered global features of the video frames; and third, performing average pooling on the global features of consecutive video frames having the longest storage duration. This part will be described in detail in the subsequent content.

Based on a feature similarity between the local features in the local feature set, the local feature set is compressed to obtain a local feature sequence of a preset storage quantity. The specific compression mode is as follows: each time a video frame is encoded, the local features of the video frame are stored into a local memory bank; and for each image patch, when the number of corresponding local features stored in the local memory bank reaches the preset storage quantity, based on the feature similarity between the local features stored in the local memory bank and local features, at the image patch, of a plurality of groups of video frames among local features to be stored, compression may be performed in the following mode: first, performing average pooling on the local features, at the image patch, of the most similar adjacent video frames in the local memory bank based on the feature similarity; second, clustering the local features, at the image patch, to be stored with the local features, at the image patch, already stored in the local memory bank, based on the feature similarity, and performing average pooling on the clustered local features, at the image patch, of the video frames; and third, performing average pooling on the local features, at the image patch, of consecutive video frames having the longest storage duration. This part will be described in detail in the subsequent content.

The calculation mode of feature similarity is as follows: cosine similarity is used for calculating the similarity between global features or between local features. The calculation formula of cosine similarity is: $cos \left(θ\right) = \frac{A ⋅ B}{\left‖A\right‖ \left‖B\right‖}$, where *A* and *B* represent two feature vectors respectively, · represents the dot product of the vectors, and ∥ *A* ∥ and ∥ *B* ∥ represent the moduli of vectors *A* and *B* respectively.

Then, based on the query transformer in the video tag recognition model, such as the query transformer 404 shown in FIG. 4, the following operations S32 and S33 may be performed:
S32: Concatenate a first learnable query feature to be trained and a second learnable query feature to be trained, and extract a self-attention feature using a self-attention mechanism, the self-attention feature fusing key information in the first learnable query feature and the second learnable query feature.

The first learnable query feature is a learnable global feature query sequence for a global feature, which may be in the form of a vector and may be denoted as Q1. The second learnable query feature is a learnable local feature query sequence for a local feature, which may also be in the form of a vector and may be denoted as Q2. The first learnable query feature and the second learnable query feature may be understood as model parameters in the query transformer.

Before model training, they may be obtained by random initialization. For example, both Q1 and Q2 may be randomly initialized as a learnable query, and learned and optimized during the model training process. Q1 represents attention to global features, while Q2 represents attention to local features. The concatenation result of Q1 and Q2 is used as an input to a self-attention mechanism. This process allows the global feature query sequence to capture local details while enabling the local feature query sequence to obtain global context, ultimately generating a fused feature representation that is both detailed and broad in view, thereby improving the model's ability to understand complex visual patterns, enabling the model to learn how to effectively detect and locate global features and local features in an image without any prior knowledge, and enhancing the model's adaptability and expressiveness.

S33: Extract, using a cross-attention mechanism, a first cross-attention feature between the self-attention feature and each global feature in the global feature sequence, and a second cross-attention feature between the self-attention feature and each local feature in the local feature sequence respectively.

In the above operation S32, the first learnable query feature and the second learnable query feature are concatenated. After concatenation, through the self-attention mechanism, the key information in the first learnable query feature and the second learnable query feature can be fused. On this basis, the cross-attention mechanism is configured for extracting the first cross-attention feature between the self-attention feature and each global feature in the global feature sequence, and the second cross-attention feature between the self-attention feature and each local feature in the local feature sequence respectively.

In all embodiments of the present disclosure, the self-attention feature obtained in operation S32 above may be split into two parts, denoted as a first self-attention feature and a second self-attention feature. This splitting process is equivalent to the inverse process of the concatenation in operation S32. For example, if in operation S32 above, the first learnable query feature and the second learnable query feature are concatenated in a row vector, then the splitting may be performed in the row vector here.

On this basis, the cross-attention mechanism may be configured for extracting the first cross-attention feature between the first self-attention feature and each global feature in the global feature sequence, and the second cross-attention feature between the second self-attention feature and each local feature in the local feature sequence respectively.

In all embodiments of the present disclosure, the query transformer includes a plurality of stacked decoders. For a first decoder, input features include the global feature sequence and the local feature sequence outputted by the memory banks. For other decoders, input features include the first cross-attention features and the second cross-attention features outputted by a preceding decoder.

During the training process of the cross-attention mechanism, the propagation and optimization of gradients are key to ensuring the learning effect of the model. After the first cross-attention feature and the second cross-attention feature are calculated, the error between the prediction result and the true label is calculated through a loss function. Then, a backpropagation algorithm is utilized to propagate the gradient of the error from the loss function backward to various parameters in the cross-attention mechanism, including weight matrices, etc. (The specific matrices are not explicitly specified in the original text, and may be inferred from the context as relevant weight matrices in the self-attention and cross-attention networks). To optimize these parameters, the Adam optimization algorithm may be adopted. The Adam algorithm combines the advantages of the AdaGrad and RMSProp algorithms, and can adaptively adjust the learning rate of each parameter. It dynamically adjusts the learning rate by calculating the first-order moment estimate (mean) and the second-order moment estimate (variance) of the gradient, enabling the model to converge faster during the training process while avoiding falling into local optima. Specifically, in each iteration, the Adam algorithm updates the gradient mean and variance estimates of the parameters, and updates the parameters according to these estimates. The formulas are as follows: ${m}_{t} = {β}_{1} {m}_{t - 1} + \left(1-{β}_{1}\right) {g}_{t}$ ${v}_{t} = {β}_{2} {v}_{t - 1} + \left(1-{β}_{2}\right) {g}_{t}^{2}$ ${\hat{m}}_{t} = \frac{{m}_{t}}{1 - {β}_{1}^{t}}$ ${\hat{v}}_{t} = \frac{{v}_{t}}{1 - {β}_{2}^{t}}$ ${θ}_{t} = {θ}_{t - 1} - \frac{α}{\sqrt{{\hat{v}}_{t}} + ϵ} {\hat{m}}_{t}$
where *mₜ* is the first-order moment estimate of the gradient (i.e., the mean of the gradient), which records the average condition of the gradient in past iterations; *vₜ* is the second-order moment estimate of the gradient (i.e., the variance of the gradient), reflecting the magnitude of change of the gradient; *β*₁ and *β*₂ are decay rates, *β*₁ and *β*₂ typically taking values of 0.9 and 0.999 respectively, configured to control the update speed of the first-order and second-order moment estimates; *gₜ* is the gradient of the current iteration, representing the direction and magnitude of parameter change in the current operation; *m̂ₜ* and *v̂ₜ* are the corrected first-order and second-order moment estimates, which need to be corrected because *mₜ* and *vₜ* tend to be biased toward zero in the early stage of training; *θₜ* is the parameter of the current iteration, i.e., the model parameter to be updated; *α* is the learning rate, controlling a stepsize of parameter update; and *ε* is a very small constant, typically taking a value of 10⁻⁸, configured to avoid a zero denominator and ensure the stability of the calculation.

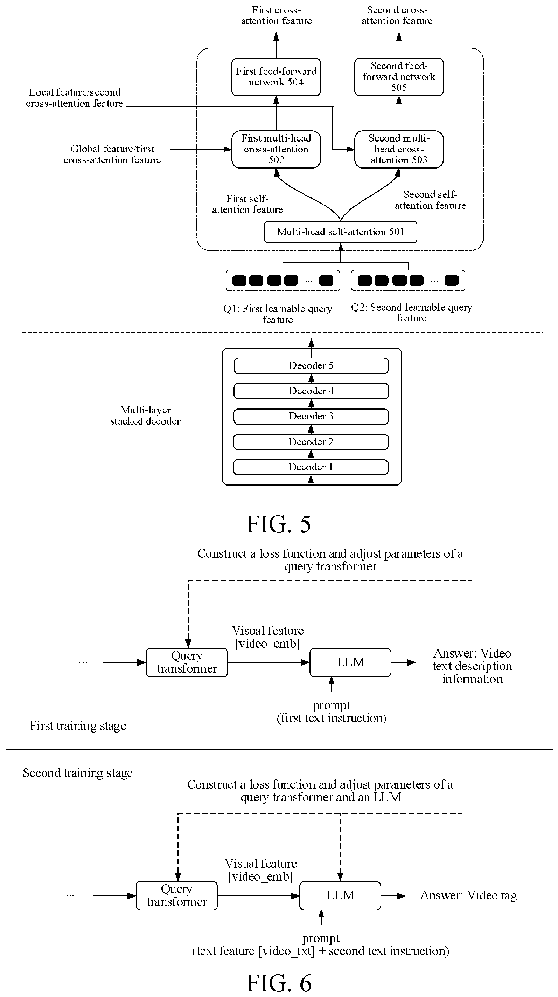

As shown in FIG. 5, the figure is a schematic structural diagram of a query transformer according to an embodiment of the present disclosure. Above the dotted line in FIG. 5 is a content structure of a decoder, and below the dotted line is a structure of a plurality of stacked decoders.

Specifically, a decoder includes a self-attention network, such as a multi-head self-attention 501 in FIG. 5, two parallel cross-attention networks, which may be denoted as a first cross-attention network and a second cross-attention network, such as a first multi-head cross-attention 502 (i.e., a first cross-attention network) and a second multi-head cross-attention 503 (i.e., a second cross-attention network) in FIG. 5, and a feed-forward network (FFN, or feedforward neural network) after each cross-attention network, such as a first feed-forward network 504 and a second feed-forward network 505 in FIG. 5. In each decoder, the cross-attention network is divided into two parallel networks, where the first cross-attention network corresponds to processing global features, and the second cross-attention network corresponds to processing local features.

The FFN may perform non-linear transformation on the features outputted by the cross-attention networks through its internal linear layer and non-linear activation function, thereby enhancing feature expression capability and making the features more suitable for subsequent task processing. Such transformation helps the model learn more complex feature relationships and patterns.

The cross-attention feature in all embodiments of the present disclosure may refer to an output of a cross-attention network. On this basis, non-linear transformation may also be performed on the output of the cross-attention network through the FFN. For simplicity of description and ease of understanding, a feature obtained by performing non-linear transformation on the output of a cross-attention network through the FFN may still be referred to as a cross-attention feature.

It needs to be emphasized herein that each decoder in all embodiments of the present disclosure corresponds to a set of Q1 and Q2, which serve as inputs to the self-attention network of the decoder. Inputs to the cross-attention network of the decoder are determined based on the above mode. For example, an input of 502 in Decoder 1 is the global features outputted by the global memory bank, and an input of 503 in Decoder 1 is the local features outputted by the local memory bank; an input of 502 in Decoder 2 is the first cross-attention features outputted by 504 in Decoder 1, and an input of 503 in Decoder 2 is the second cross-attention features outputted by 505 in Decoder 1; and an input of 502 in Decoder 3 is the first cross-attention features outputted by 504 in Decoder 2, and an input of 503 in Decoder 3 is the second cross-attention features outputted by 505 in Decoder 2. The same applies to subsequent decoders, and so on.

S34: Adjust, based on a difference between a video tag and video text description information of the sample video predicted based on obtained first cross-attention features and second cross-attention features, and corresponding sample labels, parameters of the video tag recognition model.

A trained video tag recognition model is configured to extract a video tag of a video to be recognized.

When the query transformer includes a plurality of decoders, in S34, the first cross-attention features and the second cross-attention features outputted by a last decoder are specifically referred to. Then, based on the first cross-attention features and the second cross-attention features outputted by the last decoder, a video tag and video text description information of a sample video may be predicted in conjunction with an LLM.

The prediction process will be described in detail below.

For an MLLM, there are two types of inputs received by an LLM, including visual tokens and text tokens. The visual tokens are obtained through processing by a visual encoder. To align with the input of the LLM, a query transformer is connected after the visual tokens. In addition to performing fusion and compression on global features and local features, the query transformer is also configured to map the visual tokens to an input dimension of the LLM and convert them into tokens adapted to the LLM, i.e., the visual features herein, denoted as [video_emb]. For text tokens, they include a video title, description text, OCR, ASR, etc., denoted as [video_txt]. A text token refers to a word or a subword in a text, and is a basic unit used by a model when processing text. In the video tag recognition model of the present disclosure, text tokens include a video title, description text, key text extracted by optical character recognition (OCR), subtitles or transcriptions generated by automatic speech recognition (ASR), comments and forum discussions, metadata information, etc., denoted as [video_txt], and are provided together with visual tokens as inputs to a large language model to generate a video tag.

Specifically, the first cross-attention features and the second cross-attention features outputted by the query transformer may serve as visual tokens (belonging to non-text tokens), and in conjunction with the text tokens of the video, may be configured to query the large language model 406 to obtain a corresponding video tag. That is, the query transformer herein serves as a bridge connecting non-text tokens and the LLM, and is configured to convert inputs from different modalities into tokens that can be understood by the LLM. The compressed and fused visual tokens are concatenated with text tokens of a text prompt and inputted into the LLM for training.

In addition, considering that the dimensions of the visual tokens outputted by the query transformer and the text tokens may not be the same, dimension alignment of features of different modalities may also be performed through a fully connected layer (FC). The FC may be considered as a part of the query transformer, connected to an output of a last decoder in the query transformer. Alternatively, the FC may also be regarded as an independent part between the query transformer and the LLM, such as a fully connected layer 405 in FIG. 4. Regardless of the form, the FC is configured to align the dimension of a visual feature with the dimension of a text feature.

The following is described as an example when the query transformer includes a fully connected layer.

In all embodiments of the present disclosure, in order to ensure that the visual tokens extracted by the query transformer can more accurately represent the features of a video, thereby extracting more accurate video tags, the training process of the video tag recognition model in the present disclosure may include two main training stages: a first training stage for pre-training the query transformer, and a second training stage for instruction fine-tuning training of the query transformer and the LLM.

Referring to FIG. 6, which is a schematic diagram of a staged training process of a video tag recognition model according to an embodiment of the present disclosure. In these two training stages, the input, output, and adjusted parameters of the LLM are different. In the first training stage, the input of the LLM is a visual feature obtained based on the query transformer (which may be denoted as [video_emb]) and a first text instruction, the output is video text description information, and only parameters of the query transformer are adjusted. In the second training stage, the input of the LLM is a visual feature obtained based on the query transformer, a text feature (which may be denoted as [video_txt]), and a second text instruction, the output is a video tag, and parameters of the query transformer and the LLM are adjusted. The two training stages will be described in detail below.

### (i) First training stage: pre-training for query transformer

In this stage, only the query transformer is trained, and all parameters of the visual encoder and the LLM are fixed (i.e., frozen), without adding LoRA. The main objective is to align visual tokens with the LLM.

Training data in this stage uses <sample video, video description text information> pairs, for example, <short video, video title> pairs in an actual business scenario, to train the model with the goal of generating a brief description of video content. In all embodiments of the present disclosure, an exemplary training mode includes:

concatenating, in a first training stage, first cross-attention features and second cross-attention features, and converting concatenated features into a visual feature aligned with a dimension of a text feature of the sample video; then, using a first text instruction as question-answering prompt information, and inputting the visual feature into the large language model in conjunction with the question-answering prompt information to generate the video text description information of the sample video; and, updating, based on a difference between the predicted video text description information and video text description information in the sample labels, parameters of the query transformer.

The text feature of the sample video refers to a feature obtained by encoding the video text description information of the sample video. For example, if the video text description information is a video title, the text feature is obtained by encoding the video title. If the video text description information includes a video title, extracted key text, etc., the text feature is obtained by encoding and concatenating these pieces of video text description information. A text encoder is a component configured to convert text information into a vector representation that can be processed by a computer, so as to facilitate subsequent fusion and processing with visual features. In the present disclosure, the text feature of a sample video is obtained by encoding the video text description information of the sample video through a text encoder. Specifically, it may be generated by any text encoder, such as a word embedding (Word2Vec) network, BERT, and Robustly Optimized BERT Pretraining Approach (RoBERTa). During model training, network parameters of this part need not be updated. As with the visual encoder, the network parameters of this part need not be updated during model training. The basis for selecting different text encoders may vary:

Word embedding (Word2Vec) network: It is a simple and effective text encoding method that can capture semantic relationships between words by mapping words to a low-dimensional vector space. If the video text description information is relatively simple and mainly focuses on semantic information at the word level, Word2Vec is a good choice, as it has high computational efficiency and fast training speed.

BERT: It is a pre-trained model based on a bidirectional transformer, capable of capturing contextual information of a text and having strong semantic understanding capability for text. If the video text description information is relatively complex and contains rich semantics and contextual relationships, BERT can better extract text features and improve model performance.

RoBERTa: It is a model improved based on BERT, which adopts a larger batch size and longer training time during the training process, enabling it to learn richer language representations. For large-scale video text description information, RoBERTa may exhibit better performance.

The first text instruction is configured for prompting the large language model to output video text description information of a sample video. Therefore, the first text instruction may adopt one of the following statements:

"Briefly describe the following video", "Provide a short description of the given video clip", "Concisely explain the provided video clip", "Summarize the visual content of the following video", "Provide a brief and clear explanation of the next video clip", "Briefly explain the meaning of the provided video", "Briefly describe the key features of the clip", "Briefly describe the content of the displayed video", "Provide a clear and concise summary of the following video", "Write an informative summary of the following video clip", "Present the provided video in a concise narrative mode", and so on.

The statements listed above are merely simple examples. Other statements that can prompt a large language model to output video text description information of a sample video are also applicable to all embodiments of the present disclosure, which will not be described one by one herein.

The LLM may be selected from open-source Chinese LLMs, such as chinese-llama, and BigScience Large Open-science Open-access Multilingual (BLOOM). The input prompt template is as follows:
"###Human: [video_emb][alignment instruction] ###Assistant:"
In the first training stage, [video_txt] is not inputted. Only visual information, i.e., [video_emb], is provided to the LLM, and the alignment instruction is configured for guiding the query transformer to train better.

Here, "###Human:" and "###Assistant:" are templates commonly used in training, to allow a machine to understand that after "Human:" is an instruction, and that when it sees "Assistant:", it starts to answer a question. The alignment instruction is a guidance or command given to the LLM during the training process, telling the LLM what kind of output to generate when given an input. The alignment instruction may be diversified, for example, using at least one of the statements listed as examples of the first text instruction above.

In the first training stage, when adjusting model parameters, only parameters of the query transformer are adjusted. The adjustment mode is as follows:
Based on a difference between predicted video text description information and video text description information in a sample label, a loss function is constructed, and parameters of the query transformer are updated according to the loss function.

The loss function may be, for example, Cross-Entropy Loss, Cosine Similarity Loss, and Bilingual Evaluation Understudy (BLEU Score), which is not specifically limited herein. In conjunction with the output rules of the large language model, the design and optimization process of the loss function take into account the probability distribution of a sequence generated by the model (i.e., the predicted video text description information), and the difference between the generated sequence and a target sequence (i.e., the video text description information in the sample label). By adjusting model parameters, the consistency between the text description generated by the model and the description of the true label can be gradually improved, thereby increasing the accuracy of video content understanding and the quality of natural language description.

After constructing the loss function, a gradient may be calculated through a backpropagation algorithm, and parameters of the query transformer may be adjusted to minimize the loss.

### (ii) Second training stage: instruction fine-tuning training for query transformer and LLM

In this stage, only parameters of the visual encoder are fixed, and the query transformer and the LLM are trained.

There are two modes for training the LLM. One is to directly adjust parameters of the LLM, and the other is to fix parameters of the LLM, add a Low-Rank Adaptation (LoRA) matrix, and train LoRA parameters.

For adding LoRA, parameter update for the large language model may be performed in the following mode:
fixing original parameters of the large language model, and adding a low-rank adaptation matrix to the large language model; and updating parameters of the low-rank adaptation matrix to perform parameter update for the large language model.

LoRA is a fine-tuning technique for pre-trained models. Its main objective is to adapt to a specific task by introducing an additional low-rank matrix without modifying original model parameters, thereby reducing the resources and time required for fine-tuning. Specific implementation details are as follows:

A low-rank adaptation matrix is a fine-tuning technique for pre-trained models. Its main objective is to adapt to a specific task by introducing an additional low-rank matrix without modifying original model parameters, thereby reducing the resources and time required for fine-tuning. In a large language model, assuming that a weight matrix of a certain linear layer is *W,* two additional small matrices *A* and *B* are introduced in LoRA. By updating parameters of matrices *A* and *B,* the behavior of the model is effectively adjusted to meet the requirements of a specific task without changing the original weight matrix *W* of the large language model.

Assuming that a weight matrix of a certain linear layer in a large language model is $W ∈ {ℝ}^{{d}_{out} \times {d}_{in}}$*,* where *dᵢₙ* is an input dimension and *dₒᵤₜ* is an output dimension. In LoRA, two additional small matrices $A ∈ {ℝ}^{{d}_{in} \times r}$ and $B ∈ {ℝ}^{r \times {d}_{out}}$ are introduced, where *r* is the rank of the low-rank matrix, and typically *r* ≪ *dᵢₙ, dₒᵤₜ.* These two matrices *A* and *B* are the left matrix and the right matrix after low-rank decomposition.

During forward propagation, the output of the original linear layer is *y_{original} = Wx,* where *x* is an input vector. The output after introducing LoRA is *y = Wx + BAx,* i.e., the result of *BAx* is added to the output of the original linear layer, forming the final output. In this way, without changing the original weight matrix *W* of the large language model, the behavior of the model can be effectively adjusted to meet the requirements of a specific task by updating parameters of matrices *A* and *B.*

During training, only parameters of matrices *A* and *B* need to be updated, while the original parameters *W* of the large language model remain unchanged. Since the dimensions of *A* and *B* are relatively small, the number of parameters to be updated is greatly reduced, thereby reducing the resources and time required for fine-tuning. At the same time, by adjusting the value of *r*, the expressive power and computational complexity of LoRA can be controlled.

In the above implementation, by adjusting only a small number of newly added parameters instead of all parameters of the entire large language model, LoRA greatly reduces the internal memory and computational resources required for fine-tuning, improving the efficiency of model training while maintaining the performance of the original model. Moreover, compared with a full-model fine-tuning mode, an LoRA model occupies less storage space, thus saving storage resources.

The training data in this stage is constructed based on human-audited tag data of sample videos in actual business scenarios (such as medium-length videos, long-form videos, or video streams), denoted as <sample video, video tag>. For example, in an actual business scenario, <video stream i^{(t)}, tag list i^{(t)}>, where i is an index representing the i^{th} sample video in the training sample set, and the superscript t represents time t, and the tag list ᵢ^{(t)}represents a list of video tags recognized for video stream i at time t.

The same video stream may be audited multiple times at different times, resulting in different tag results.

In this stage, instruction fine-tuning is performed with the goal of generating a tag list text. In all embodiments of the present disclosure, the following training mode is adopted, including:

concatenating, in the second training stage, first cross-attention features and second cross-attention features, and converting concatenated features into a visual feature aligned with a dimension of a text feature of the sample video; and using the text feature and a second text instruction as question-answering prompt information, and inputting the visual feature into the large language model in conjunction with the question-answering prompt information to generate the video tag of the sample video; and, updating, in the second training stage, parameters of the query transformer and the large language model based on a difference between the predicted video tag and a video tag in the sample labels.

The text feature of the sample video is the same as described above, which will not be repeated here. The second text instruction is used to prompt the large language model to output a video tag of a sample video. For example, the second text instruction may adopt one of the following statements:
"What tags can be used to summarize the above video?", "Please output some key content tags based on the content of the above video", "Generate main content tags based on the content of the above video", and so on.

The statements listed above are merely simple examples. Other statements that can prompt a large language model to output a video tag of a sample video are also applicable to the embodiments of the present disclosure, which will not be described one by one herein.

The LLM may be selected from open-source Chinese LLMs, such as chinese-llama, and BLOOM. The input prompt template is as follows:
"###Human: [video_emb][video_txt][instruct] ###Assistant:"
[video_emb], [video_txt], and [instruct] are the visual tokens of a video, the text tokens of the video, and tokens of an instruction text, respectively.

In the second training stage, [video_txt] and [video_emb] are input to provide visual information and text information to the LLM, and the instruct instruction is used to train the query transformer and the LLM.

Here, "###Human:" and "###Assistant:" are templates commonly used in training, to allow a machine to understand that after "Human:" is an instruction, and that when it sees "Assistant:", it starts to answer a question. Similar to the alignment instruction in the first training stage, the instruct instruction is also a guidance or command given to the LLM during the training process, telling the LLM what kind of output to generate when given an input. The instruct instruction may also be designed with synonymous instructions, which can improve the training effect, for example, using at least one of the statements listed as examples of the second text instruction above.

In the second training stage, when adjusting model parameters, both the query transformer and the LLM need to be adjusted. The adjustment mode is as follows:
Based on a difference between a predicted video tag and a video tag in a sample label, a loss function is constructed. When LoRA is not added, parameters of the query transformer and the LLM are updated according to the loss function. Alternatively, when LoRA is added, parameters of the query transformer and LoRA are updated according to the loss function.

The type and construction mode of the loss function are similar to those in the first training stage, which will not be repeated here.

After constructing the loss function, a gradient may be calculated through a backpropagation algorithm, and parameters of the query transformer may be adjusted to minimize the loss.

The above description is described as an example when the query transformer includes an FC. If the FC is independent of the query transformer, then in the first training stage and the second training stage, parameters of the FC are also updated.

Furthermore, two modes for updating LLM parameters are mentioned herein: one without adding LoRA and one with adding LoRA. Assuming that the FC is independent of the query transformer, the parameter update logic during model training will be briefly described below with reference to the accompanying drawings.

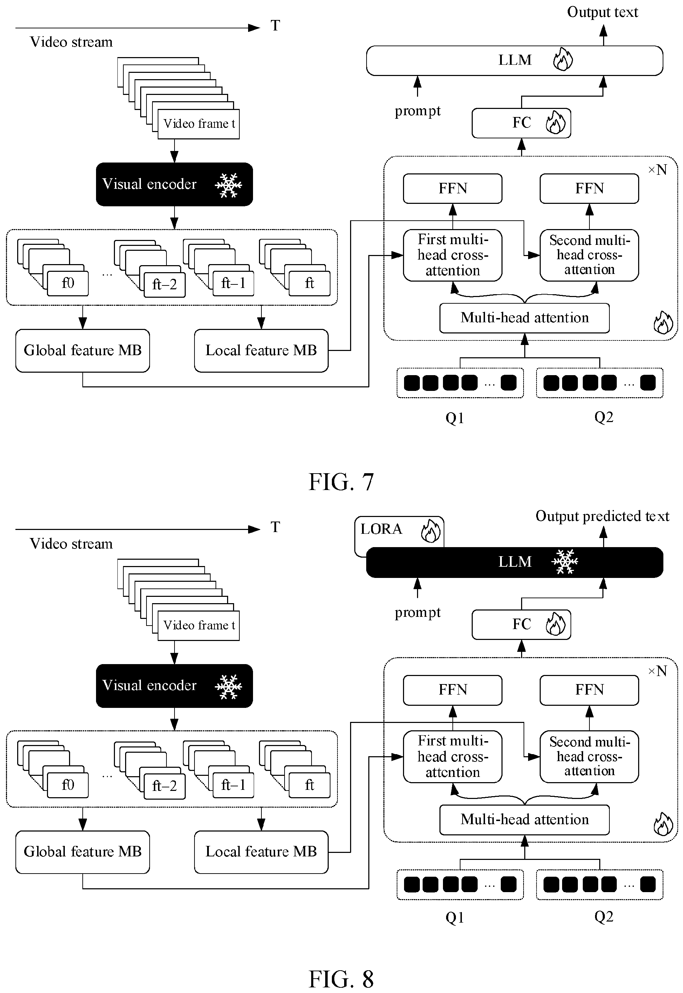

As shown in FIG. 7, the figure is a schematic diagram of a model parameter update according to an embodiment of the present disclosure. FIG. 7 illustrates a more specific network structure of a video tag recognition model. The visual encoder is configured to sequentially encode each video frame in an input video stream to generate global features and local features of each video frame. The global feature MB therein is the global memory bank herein, configured to store and compress global features. The local feature MB is the local memory bank herein and configured to store and compress local features.

When video tag recognition is required, the global feature sequence in the global feature MB is inputted into the first multi-head cross-attention in the query transformer on the right, and the local feature sequence in the local feature MB is inputted into the second multi-head cross-attention in the query transformer on the right. The query transformer includes N stacked decoders. After processing by the self-attention mechanism and the cross-attention mechanism, the output is then dimension-aligned through an FC, and inputted into the LLM in conjunction with a prompt for prediction. The prompt includes video description text information and a text instruction (e.g., the first text instruction, the second text instruction).

In FIG. 7, different patterns are configured for indicating whether different modules in the model need to undergo parameter update. A snowflake pattern indicates that parameters are frozen and not updated, and a flame pattern indicates that parameters are updated. Thus, FIG. 7 indicates that during model training, the visual encoder is not updated, while the query transformer, the FC, and the LLM undergo parameter update. The FC is configured to dimension-align features outputted by the query transformer to adapt to the input of the LLM, and in the mode without adding LoRA, undergoes parameter update together with the query transformer and the LLM.

As shown in FIG. 8, the figure is a schematic diagram of another model parameter update according to an embodiment of the present disclosure. The difference from FIG. 7 is that in FIG. 8, the original parameters of the LLM are frozen, and the visual encoder and the LLM are not updated, while the query transformer, the FC, and LoRA undergo parameter update. The FC is configured to dimension-align features outputted by the query transformer to adapt to the input of the LLM, and in the mode with adding LoRA, undergoes parameter update together with the query transformer and LoRA.

Of course, the FC layer may also be replaced with a linear projection module or a multi-layer perceptron (MLP), etc., which is not specifically limited herein.

In the above implementation, focusing on training the query transformer in the first training stage and adjusting parameters of the query transformer based on video text description information can improve the accuracy of visual feature extraction by the query transformer, ensuring that the extracted visual features can more accurately describe main content of a video. On this basis, in the second training stage, the query transformer and the LLM are jointly adjusted, and parameters of the query transformer and the LLM are adjusted based on video tags, ensuring that the LLM can generate more accurate video tags based on the visual features extracted by the query transformer, thereby improving the accuracy of video tags extracted by the model.

In addition, when training the video tag recognition model, the first training stage and the second training stage may be performed alternately, i.e., updating parameters of the query transformer once, then updating parameters of the query transformer and the LLM jointly once, then updating parameters of the query transformer once again, then updating parameters of the query transformer and the LLM jointly once again, and so on.

In addition, the second training stage may also be performed after the first training stage is completed, i.e., updating parameters of the query transformer multiple times, and updating parameters of the query transformer and the LLM jointly multiple times.

Regardless of which training mode is adopted or which training stage is being performed, iteration termination conditions include at least one of the following conditions:
(1) The number of iterations reaches a set threshold number; and
(2) a model loss value is less than a set loss threshold.

In all embodiments of the present disclosure, when the number of iterations does not exceed the preset threshold number and the model loss value is not less than the set loss threshold, it is considered that the current model does not satisfy the iteration termination condition, and model parameters need to be adjusted to continue training. After parameter adjustment, the process proceeds to the next iteration of training. When the number of iterations exceeds the preset threshold number, or the model loss value is less than the set loss threshold, it is considered that the current model satisfies the convergence condition, and model training ends.

The visual encoder and the text encoder in the present disclosure may both be replaced with networks of other structures. The query transformer is configured to align visual features to the input of the LLM, and thus may also be understood as a feature alignment module. In addition to being designed as a query transformer, the feature alignment module may also be designed as other forms of adapter networks, q-former networks, etc., and is not limited to the query transformer designed in the present disclosure. In addition, the memory bank may also be changed to other similar memory bank structures, and the main process of the present disclosure may also replace the framework of the LLM with other generative models, and so on. Simple modifications to the units in the video tag recognition model listed in the present disclosure, or the application of the core process of the present disclosure to other scenarios, all fall within the scope of protection of the present disclosure.

After model training is completed, the model may be deployed online. Whether it is a short video, a medium-length video, a long-form video, or a video stream, all are inputted in the form of a video frame sequence. After compression by the MB, an audit (i.e., triggering video tag recognition) may be triggered at any time. The compressed and fused visual tokens are computed based on the query transformer, and inputted into the LLM in conjunction with the text tokens of the video and the text instruction to generate a predicted tag result.

The above is mainly an introduction to the model training process. The model application process will be described below.

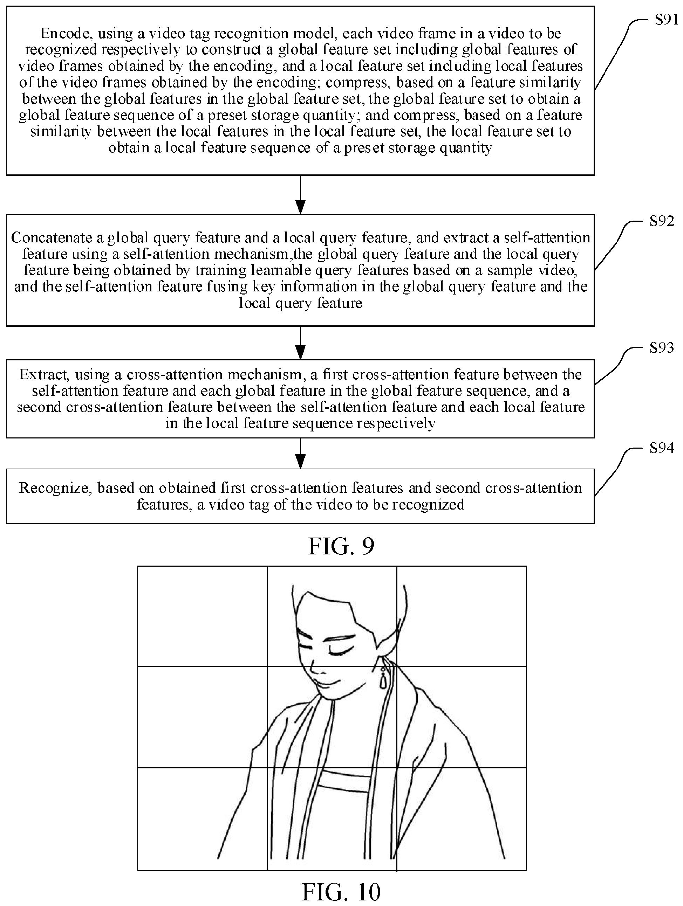

Referring to FIG. 9, which is an implementation flowchart of a video tag recognition method according to an embodiment of the present disclosure, taking an execution entity being a server as an example, the specific implementation process of the method includes the following operations S91 to S94:

Operation S91: Encode, using a video tag recognition model, each video frame in a video to be recognized respectively to construct a global feature set including global features of video frames obtained by the encoding, and a local feature set including local features of the video frames obtained by the encoding; compress, based on a feature similarity between the global features in the global feature set, the global feature set to obtain a global feature sequence of a preset storage quantity; and compress, based on a feature similarity between the local features in the local feature set, the local feature set to obtain a local feature sequence of a preset storage quantity.

Similar to the sample videos listed above, the video to be recognized in all embodiments of the present disclosure may be any video, including but not limited to a short video, a medium-length video, a long-form video, or a video stream.

A short video, a medium-length video, and a long-form video refer to videos of different durations. For example, a short video generally refers to video content with a duration within 15 seconds to 10 minutes, a medium-length video generally covers a range of 1 minute to 30 minutes, and a long-form video refers to a video with a duration exceeding 30 minutes, such as a TV series, and a movie.

In this operation, the visual encoder in the video tag recognition model may be configured to encode each video frame in the video to be recognized, to obtain a global feature of each video frame and local features of local regions of each video frame, and each local feature corresponds to an image patch in the video frame.

In all embodiments of the present disclosure, before encoding the video to be recognized, the server may select an appropriate video frame division mode based on content complexity and feature distribution of the video. If the video content is relatively simple and the feature distribution is relatively uniform, the server may divide video frames in the video to be recognized into the same number of image patches, which ensures consistency in feature extraction for each video frame and facilitates subsequent processing. For example, for some landscape videos, where the picture elements do not change much, using the same number of image patches for division can efficiently extract global features and local features. However, if the video content is complex and the feature distribution is uneven, the server may divide video frames in the video to be recognized in a pyramid division mode to obtain corresponding image patches, where different video frames have different numbers of image patches. Pyramid division can provide more detailed feature extraction in regions where video content changes greatly, and reduce unnecessary computation in regions where content is relatively stable. For example, for an action video containing fast-moving objects and complex scene transitions, pyramid division can better capture key features of the video.

The number of image patches of each video frame obtained by the above division mode may be the same, or may increase in a geometric progression. For example, the video frames in the video to be recognized are all divided in the same division mode, so that each video frame has the same number of image patches. For example, each video frame is divided in a 3×3 mode, as shown in FIG. 10.

In addition, the pyramid division mode may refer to starting from the first frame of the video, the number of image patches increases according to a certain rule. For example, the number of image patches of a next frame is twice that of a previous frame. The server may also divide video frames in the video in a pyramid division mode. For example, the first video frame is divided in a 2×2 mode, resulting in 4 image patches; and the second video frame is divided in a 3×3 mode, resulting in 9 image patches, and so on.

When division is performed, each image patch may have overlapping content with another image patch, or may have no overlapping content, which is not specifically limited herein.

The following description takes an example where video frames in a video to be recognized are all divided in the same division mode. Assuming that each video frame has the same number of image patches, which is N, when encoding a video frame through the visual encoder ViT, the global feature thereof is denoted as f_{glob}, with a size of 1*d, and the local features thereof are denoted as f_{loc,i}, with a size of N*d, where N is the number of patches, and i=1, 2, ..., N.

In all embodiments of the present disclosure, a global feature set includes at least one global feature, specifically including global features of currently encoded video frames in the video to be recognized respectively. As time goes by, more and more video frames are encoded, and thus the number of global features included in the global feature set also increases.

Similarly, a local feature set includes at least one local feature, specifically including local features of currently encoded video frames in the video to be recognized respectively. If each video frame can be divided into N image patches, then each video frame corresponds to N local features.

In all embodiments of the present disclosure, compression may be performed after all video frames in the video to be recognized are encoded, or may be performed while encoding. When compression is performed while encoding, an exemplary implementation is as follows:
storing, each time a video frame is encoded, the global features of the video frame into a global memory bank, and storing the local features of the video frame into a local memory bank.

Specifically, the two memory banks designed in the present disclosure store and compress global features and local features, respectively. For an input video frame sequence, it can be represented as {img^{(t)}|t=1,2,3,...,T}, where T is the total number of frames of the video to be recognized. Here, T may increase continuously, and it is not limited to processing a video frame sequence of a known length. As described above, after each video frame img^{(t)} is subjected to feature extraction by the visual encoder, a global feature and local features can be obtained, represented as f^{(t)} = {f_{glob}^{(t)},{f_{loc,i}^{(t)}}}, and inputted into corresponding MBs.

In addition, due to the large number of video tokens, both the global memory bank and the local memory bank are provided with respective corresponding preset storage quantities. For example, a maximum length is set in the global memory bank, i.e., the preset storage quantity of the global memory bank is M, indicating that global features of at most M frames of the video can be accommodated. Correspondingly, the preset storage quantity of the local memory bank is M*N, indicating that local features of at most M frames of the video can be accommodated, with each frame of the video corresponding to N local features.

Further, when the number of global features stored in the global memory bank reaches the preset storage quantity, global features of at least two video frames are fused into a global feature of one video frame based on a feature similarity between the global features stored in the global memory bank and global features of a plurality of groups of video frames among global features to be stored, so as to adjust the global features stored in the global memory bank, so that the number of global features is less than or equal to the preset storage quantity; and for each image patch, when a number of corresponding local features stored in the local memory bank reaches the preset storage quantity, feature fusion is performed on corresponding local features of at least two video frames in the local memory bank based on a feature similarity between the local features in the local memory bank, so that the number of local features stored in the local memory bank is less than or equal to the preset storage quantity.

For example, for the global memory bank, when the amount of data in the MB reaches M, if a global feature of a new video frame needs to be added to the MB, compression needs to be performed once, so that the data in the MB remains not exceeding M.

Similarly, for the local memory bank, when the amount of data in the MB reaches M*N, if local features of a new video frame need to be added to the MB, compression needs to be performed once, so that the data in the MB remains not exceeding M*N.

When compressing local features, the compression is specifically performed on an image patch basis, and feature fusion is performed on local features of each image patch.

In addition, when calculating a feature similarity, it is generally implemented by calculating a distance between feature vectors. In all embodiments of the present disclosure, there are many ways to calculate a feature similarity, including but not limited to any of the following:
cosine similarity, Euclidean distance, Manhattan distance, Jaccard similarity, and Pearson Correlation Coefficient.

In the above implementation, the global memory bank can capture macroscopic information of a video, while the local memory bank focuses on detail changes, and the two complement each other. By introducing two memory banks to store and compress global features and local features of a video frame sequence respectively, video data can be processed more efficiently, ensuring comprehensiveness of information while reducing redundancy, thereby improving storage efficiency and computational performance.

Description will be made below by taking cosine similarity as an example.

In all embodiments of the present disclosure, the global memory bank and the local memory bank are collectively referred to as a memory bank, and the global features and the local features are collectively referred to as target features. In all embodiments of the present disclosure, feature fusion on target features of at least two video frames may be performed in any of the following modes:
Compression mode I: performing average pooling on target features of the most similar adjacent video frames in a memory bank based on a feature similarity.

Specifically, when the storage quantity of the memory bank has reached an upper limit, each time a new target feature, i.e., a target feature to be stored, needs to be stored, average pooling may be performed on target features of the most similar adjacent video frames in the memory bank, and the target feature to be stored may be stored into the memory bank.

For example, for the global memory bank: fusing global features of at least two video frames into a global feature of one video frame based on a feature similarity between the global features stored in the global memory bank and global features of a plurality of groups of video frames among global features to be stored includes: fusing, based on a feature similarity between the global features stored in the global memory bank and global features of a plurality of groups of adjacent video frames among the global features to be stored, global features of at least one most similar group of adjacent video frames by performing average pooling on a per-group basis, to obtain a global feature of one video frame in each group.

Specifically, the global features of adjacent video frames having the maximum cosine similarity are calculated, and compressed into one global feature using average pooling, which is denoted as one token, and may be expressed as: $k = a r g {\text{max}}_{t} \left(\text{cos} \left({f}_{g l o b} {}^{\left(t\right)} , {f}_{g l o b} {}^{\left(t + 1\right)}\right)\right) , t = 1,2, … , M$ formula (1) ${{f}_{glob}}^{\left(k\right)} = 0.5 ∗ \left({{f}_{glob}}^{\left(k\right)}+{{f}_{glob}}^{\left(k+1\right)}\right)$ formula (2)
where k represents a preceding frame among the most similar adjacent video frames, *f_{glob}*^{(*k*)}, i.e., the global feature of that video frame; and k+1 represents a succeeding frame among the most similar adjacent video frames, *f_{glob}*^{(*k+*1)}, i.e., the global feature of that video frame. After feature fusion of these two frames, the obtained global feature may still be denoted as *f_{glob}*^{(*k*)}.

Specifically, assuming that the global memory bank currently stores global features of the 1^{st} to 10^{th} frames, where M=10, and after encoding the 11^{th} video frame to obtain a global feature, the data amount of the global memory bank reaches an upper limit, then, it is necessary to analyze and calculate the similarity between every two adjacent frames among the 1^{st} to 10^{th} frames, and perform average pooling on the global features of the most similar adjacent video frames.

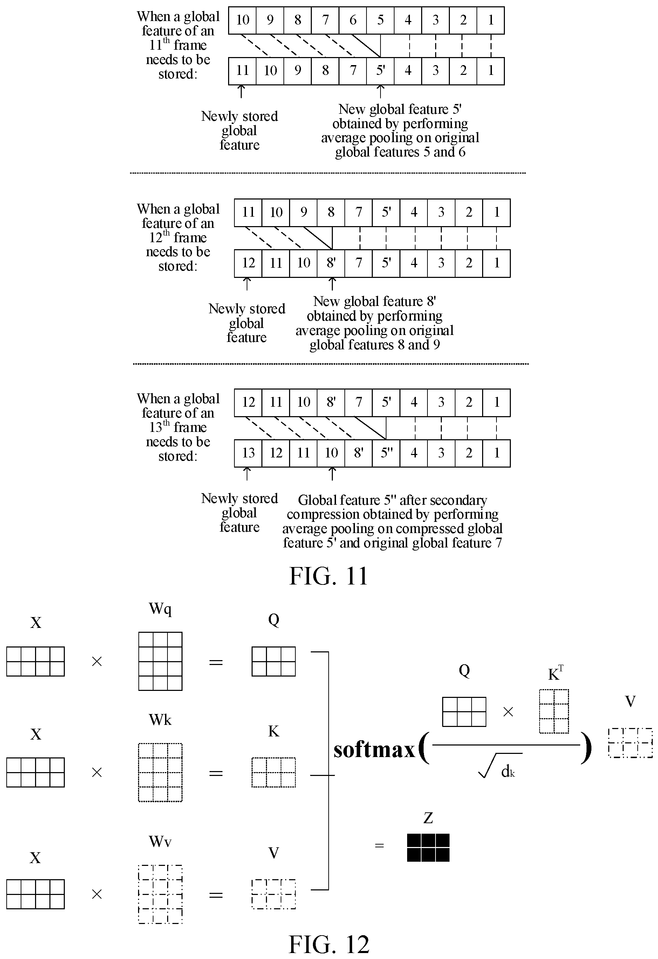

As shown in FIG. 11, the figure is a schematic diagram of a global feature compression process according to an embodiment of the present disclosure. Assuming that from right to left, several frames of global features are sequentially stored in the global memory bank and k=5, then, average pooling needs to be performed on the global features of the 5^{th} frame and the 6^{th} frame to serve as a new global feature of the 5^{th} frame, which may be denoted as 5'. Then, the global feature of the 11^{th} video frame may be stored into the global memory bank.

Further, assuming that after encoding the 12^{th} video frame to obtain a global feature, the data amount of the global memory bank also reaches an upper limit, then, it is necessary to analyze and calculate the similarity between every two adjacent frames among the 1^{st} frame, the 2^{nd} frame, the 3^{rd} frame, the 4^{th} frame, the compressed 5^{th} frame, the 7^{th} frame, the 8^{th} frame, the 9^{th} frame, the 10^{th} frame, and the 11^{th} frame, and perform average pooling on the global features of the most similar adjacent video frames.

It needs to be emphasized herein that, considering that each compression in the present disclosure affects the numbers of video frames corresponding to global features, each pair of adjacent frames here refers to frames that are adjacent in position in the global memory bank, rather than strictly adjacent in the original sense. For example, the original 4^{th} frame and the compressed 5^{th} frame belong to an adjacent pair, and the compressed 5^{th} frame and the original 7^{th} frame also belong to an adjacent pair.

Assuming that this time, average pooling needs to be performed on the global features of the 8^{th} frame and the 9^{th} frame to serve as a new global feature of the 8^{th} frame, denoted as 8', then, the global feature of the 12^{th} video frame may be stored into the global memory bank.

Similarly, assuming that after encoding the 13^{th} video frame to obtain a global feature, the data amount of the global memory bank also reaches an upper limit, then, it is necessary to analyze and calculate the similarity between every two adjacent frames among the 1^{st} frame, the 2^{nd} frame, the 3^{rd} frame, the 4^{th} frame, the compressed 5^{th} frame, the compressed 8^{th} frame, the 10^{th} frame, the 11^{th} frame, and the 12^{th} frame, and perform average pooling on the global features of the most similar adjacent video frames.

Assuming that this time, average pooling needs to be performed on the global features of the compressed 5^{th} frame and the 7^{th} frame to serve as a global feature of the 5^{th} frame after secondary compression, denoted as 5", then, the global feature of the 13^{th} video frame may be stored into the global memory bank.

The same principle applies when subsequently storing global features of new video frames, which will not be repeated here.

Similarly, for the local memory bank: fusing corresponding local features of at least two video frames in the local memory bank based on a feature similarity between local features in the local memory bank includes: performing average pooling, on a per-group basis, on local features of at least one most similar group of adjacent video frames in the local memory bank based on a feature similarity between local features in the local memory bank.

Specifically, a similar method is adopted to calculate local features (specifically, local features at corresponding patch positions) of adjacent video frames having the maximum cosine similarity, and compress them into one local feature using average pooling, which is denoted as one token. Unlike global features, a video frame may be divided into N patches, and each patch corresponds to a local feature. Therefore, when performing local feature fusion on adjacent video frames, attention needs to be paid to fusing corresponding patch positions, which may be specifically expressed as: ${k}_{i} = a r g {\text{max}}_{t} \left(\text{cos} \left({f}_{l o c , i} {}^{\left(t\right)} , {f}_{l o c , i} {}^{\left(t + 1\right)}\right)\right) , t = 1,2, … , M , i = 1,2, … , N$ formula (3) ${{f}_{loc , i}}^{\left(k\right)} = 0.5 ∗ \left({{f}_{loc , i}}^{\left(k\right)}+{{f}_{loc , i}}^{\left(k+1\right)}\right)$ formula (4)
where k represents a preceding frame among the most similar adjacent video frames, *f_{loc,i}*^{(*k*)}, i.e., the local feature of the i-th patch in that video frame; and k+1 represents a succeeding frame among the most similar adjacent video frames, *f_{loc,i}*^{(*k+*1)}, i.e., the local feature of the i-th patch in that video frame. After feature fusion of the i-th patch in these two frames, the obtained local feature may still be denoted as *f_{loc,i}*^{(*k*)}.

In all embodiments of the present disclosure, compression of global features and local features is implemented based on two memory banks. Therefore, in each compression, it is not limited that global features and local features of the same two adjacent video frames are compressed simultaneously.

In addition, considering that a plurality of groups of most similar adjacent video frames may exist during each compression, in such a case, when performing average pooling on target features of the most similar adjacent video frames, an exemplary implementation is as follows:
performing average pooling on target features of adjacent video frames that have the longest storage duration and are most similar in the memory bank; or, performing average pooling on target features of each group of most similar adjacent video frames in the memory bank respectively.

The first mode indicates that if a plurality of groups of most similar adjacent video frames exist, compression is performed on the adjacent video frames having a relatively long storage duration based on the storage duration. Of course, each group may also be compressed.

Specifically, if the global features of the plurality of groups of adjacent video frames have global features of a plurality of most similar groups of adjacent video frames, the fusing global features of at least one most similar group of adjacent video frames by performing average pooling on a per-group basis to obtain a global feature of one video frame in each group includes: performing average pooling on global features of a group of adjacent video frames that is most similar and includes a global feature having a longest storage duration, among the global features of the plurality of most similar groups of adjacent video frames.

For example, assuming that the global memory bank currently stores global features of the 1^{st} to 10^{th} frames, where M=10, and after encoding the 11^{th} video frame to obtain a global feature, the data amount of the global memory bank reaches an upper limit, then, it is necessary to analyze and calculate the similarity between every two adjacent frames among the 1^{st} to 10^{th} frames, and perform average pooling on the global features of the most similar adjacent video frames.

Assuming that the calculated most similar adjacent video frames are [5^{th} frame, 6^{th} frame] and [8^{th} frame, 9^{th} frame], where the 5^{th} frame has the longest storage duration, then, average pooling may be performed on the global features of the 5^{th} frame and the 6^{th} frame to serve as a new global feature of the 5^{th} frame, and the global feature of the 11^{th} video frame may be stored into the global memory bank.

Of course, average pooling may be performed on the global features of the 5^{th} frame and the 6^{th} frame to serve as a new global feature of the 5^{th} frame, and average pooling may be performed on the global features of the 8^{th} frame and the 9^{th} frame to serve as a new global feature of the 8^{th} frame, and the global feature of the 11^{th} video frame may be stored into the global memory bank.

In addition, there is still one position left in the global memory bank. In this way, after encoding the 12^{t}h video frame to obtain a global feature, the data amount of the global memory bank has not yet reached an upper limit, so the global feature of the 12^{th} frame may be directly stored into the global memory bank. Further, after encoding the 13^{th} video frame to obtain a global feature, the data amount of the global memory bank reaches an upper limit, and compression may be performed again.

In the above implementation, compressing features of video frames having a longer storage duration based on the storage duration can not only reduce data redundancy and save data storage space, but also free up more space for new data, ensuring the timeliness of video tag recognition results.

Compression mode II: clustering, based on a feature similarity, target features to be stored with target features already stored in a memory bank, and performing average pooling on clustered target features of video frames.

The target features are global features or local features, and correspondingly, the memory bank is a global memory bank or a local memory bank. When the storage quantity of the memory bank has reached an upper limit, each time a new target feature, i.e., a target feature to be stored, needs to be stored, the target feature to be stored may be clustered with the most similar target feature in the memory bank, and average pooling may be performed on the clustered target features of the two video frames, so as to achieve a compression effect.

Specifically, fusing global features of at least two video frames into a global feature of one video frame based on a feature similarity between the global features stored in the global memory bank and global features of a plurality of groups of video frames among global features to be stored includes: clustering, based on the feature similarity between the global features stored in the global memory bank and global features of a plurality of groups of video frames among global features to be stored, at least some of the global features stored in the global memory bank and the global features to be stored, and fusing global features of at least two video frames clustered into one category into a global feature of one video frame in the one category.

Assuming that the global memory bank currently stores global features of the 1^{st} to 10^{th} frames, where M=10, and after encoding the 11^{th} video frame to obtain a global feature, the data amount of the global memory bank reaches an upper limit, then, it is necessary to analyze which frame among the 1^{st} to 10^{th} frames is most similar to the 11^{th} frame, for example, the 10^{th} frame. Then, average pooling may be performed on the 10^{th} frame and the 11^{th} frame, and the pooled global feature may be stored into the global memory bank.

Similarly, during clustering, if there are a plurality of target features in the memory bank that are most similar to the target feature to be stored, the target feature having the longest storage duration in the memory bank may be clustered with the target feature to be stored; or, the plurality of target features in the memory bank that are most similar to the target feature to be stored and the target feature to be stored may be clustered.

Assuming that the global memory bank currently stores compressed global features of the 1^{st} to 11^{th} frames, where M=10, and after encoding the 12^{th} video frame to obtain a global feature, the data amount of the global memory bank reaches an upper limit, then, it is necessary to analyze which frames in the global memory bank are most similar to the 12^{th} frame, for example, the 2^{nd} frame and the 3^{rd} frame. Among them, the 2^{nd} frame has the longest storage duration. Then, average pooling may be performed on the 2^{nd} frame and the 12^{th} frame, and the pooled global feature may be stored into the global memory bank. In this way, after encoding the 13^{th} video frame to obtain a global feature, the data amount of the global memory bank still reaches an upper limit. Then, it is necessary to analyze which frame in the global memory bank is most similar to the 13^{th} frame, and perform average pooling.

Of course, average pooling may also be performed on the 2^{nd} frame, the 3^{rd} frame, and the 12^{th} frame, and the pooled global feature may be stored into the global memory bank. In this way, after encoding the 13^{th} video frame to obtain a global feature, the data amount of the global memory bank has not yet reached an upper limit, so the global feature of the 13^{th} frame may be directly stored into the global memory bank.

Of course, when the storage quantity of the memory bank has reached an upper limit, each time a new target feature, i.e., a target feature to be stored, needs to be stored, the target feature to be stored may be clustered with several similar target features in the memory bank, and average pooling may be performed on the clustered target features of these video frames, so as to achieve a compression effect. The several similar target features refer to target features having a feature similarity with the target feature to be stored greater than a certain threshold, or target features ranking top in terms of feature similarity, etc., which is not specifically limited herein.

Similarly, for the local memory bank, a similar compression mode is adopted, with the difference only being that when performing local feature fusion on at least two video frames, attention needs to be paid to fusing corresponding patch positions.

Specifically, in all embodiments of the present disclosure, fusing local features, at the image patch, of at least two video frames into a local feature, at the image patch, of one video frame based on a feature similarity between the local features stored in the local memory bank and local features, at the image patch, of the plurality of groups of video frames among local features to be stored includes: fusing, based on a feature similarity between the local features stored in the local memory bank and local features, at the image patch, of a plurality of groups of adjacent video frames among the local features to be stored, local features, at the image patch, of at least one most similar group of adjacent video frames by performing average pooling on a per-group basis, to obtain a local feature, at the image patch, of one video frame in each group.

In all embodiments of the present disclosure, if the local features of the plurality of groups of adjacent video frames at the image patch have local features of a plurality of most similar groups of adjacent video frames at the image patch, the fusing local features, at the image patch, of at least one most similar group of adjacent video frames by performing average pooling on a per-group basis includes: performing average pooling, on a per-group basis, on local features, at the image patch, of at least one group of adjacent video frames that is most similar and includes a local feature having a longest storage duration, among the local features, at the image patch, of the plurality of most similar groups of adjacent video frames.

In all embodiments of the present disclosure, fusing local features, at the image patch, of at least two video frames into a local feature, at the image patch, of one video frame based on a feature similarity between the local features stored in the local memory bank and local features, at the image patch, of a plurality of groups of video frames among local features to be stored includes: clustering, based on a feature similarity between the local features stored in the local memory bank and local features, at the image patch, of a plurality of groups of video frames among the local features to be stored, at least some of the local features stored in the local memory bank and the local features to be stored, and fusing local features, at the image patch, of at least two video frames clustered into one category into a local feature, at the image patch, of one video frame in the one category.

In the above all embodiments of the present disclosure, target features are clustered into different groups based on feature similarity. If a new feature is sufficiently similar to a certain feature in the memory bank, they will be grouped into the same cluster, which can group similar video frame features together, reduce repeated storage, and retain key information of the video.

The above-listed several compression modes are all implemented based on feature similarity. In addition, feature compression may also be performed based on storage duration, for example:
Compression mode III: performing average pooling on target features of consecutive video frames having the longest storage duration, to reduce inter-frame redundancy. Compression mode III may be adopted when neither compression mode I nor compression mode II is adopted, or may be used in combination with at least one of compression mode I and compression mode II. For example, when the number of target features in a memory bank that have a storage duration reaching a preset storage duration is less than or equal to 1, at least one of compression mode I and compression mode II is adopted; and when the number of consecutive target features in a memory bank that have a storage duration reaching the preset storage duration is greater than or equal to 2, compression mode III is adopted.

When the storage quantity of the memory bank has reached an upper limit, each time a new target feature, i.e., a target feature to be stored, needs to be stored, average pooling may be performed on target features of several adjacent video frames having the longest storage duration in the memory bank, and the target feature to be stored may be stored into the memory bank.

To accurately measure the storage duration, a timestamp may be recorded for each feature in the memory bank, where the timestamp indicates the time when the feature is stored into the memory bank. When feature compression needs to be performed, the feature having the longest storage duration is determined by comparing the timestamps. At the same time, in order to better manage the storage duration of the memory bank, a time threshold *Tₜₕ* may be set. When the storage duration of a certain feature in the memory bank exceeds *Tₜₕ*, priority is given to compressing that feature. For example, for the global memory bank, when the number of global features having a storage duration exceeding *Tₜₕ* reaches a certain proportion, compression is performed by performing average pooling on global features of consecutive video frames having the longest storage duration. Similarly, for the local memory bank, corresponding processing is performed according to the storage duration of local features corresponding to each image patch. This can more effectively control data update in the memory bank, ensuring that the model can timely reflect the latest features of a video.

For example, each time a new target feature needs to be stored, average pooling may be performed on target features of the first two stored video frames in chronological order.

In addition, a sliding window may also be used for feature compression. The size of the sliding window is at least 2 and at most M. For example, if a sliding window of length 2 is selected herein, then each time a new target feature needs to be stored, average pooling may be performed on target features of two video frames within the sliding window, and so on.

A sliding window is a method for feature compression. In the present disclosure, when the storage quantity of a memory bank has reached an upper limit, a sliding window may be used for feature compression each time a new target feature needs to be stored. The size of the sliding window is at least 2 and at most a preset storage quantity M. For example, if a sliding window of length 2 is selected, then each time a new target feature needs to be stored, average pooling is performed on target features of two video frames within the sliding window.

The above-listed several compression modes are merely simple examples. Besides these, other compression modes are also applicable to all embodiments of the present disclosure, which will not be described one by one herein.

In the above implementation, performing feature fusion on target features of two or more video frames using average pooling can avoid storing too many almost identical features, save storage space, and more accurately reflect common attributes of these video frames. In addition, the average pooling operation can also reduce noise influence and improve feature stability.

In all embodiments of the present disclosure, a video to be recognized is inputted in the form of a video frame sequence, and feature compression is performed through a memory bank. In order to avoid unnecessary resource waste, a specified recognition time may be set to trigger video tag recognition.

The specified recognition time refers to a time flexibly set according to actual requirements, and may be set based on the duration, type, and the like of the video to be recognized, for triggering video tag recognition. When the specified recognition time is reached, the global feature sequence stored in the global memory bank and the local feature sequence stored in the local memory bank are read, and the subsequent video tag recognition process is performed; and if the specified recognition time is not reached, the feature sequences stored in the memory bank are not read temporarily, and only feature compression is performed based on the memory bank.

Specifically, before extracting, using a cross-attention mechanism, a first cross-attention feature between the self-attention feature and each global feature in the global feature sequence, and a second cross-attention feature between the self-attention feature and each local feature in the local feature sequence respectively, it is necessary to determine whether a specified recognition time is reached. If the specified recognition time is reached, an audit is triggered. The setting of the specified recognition time may be flexibly adjusted according to actual requirements.

If it is determined that the specified recognition time is reached, the global feature sequence stored in the global memory bank and the local feature sequence stored in the local memory bank are read, and the subsequent process is performed to achieve video tag recognition.

If it is determined that the specified recognition time is not reached, the feature sequences stored in the global memory bank and the local memory bank are not read temporarily, and correspondingly, the subsequent tag recognition process is not performed temporarily, and only feature compression is performed based on the memory bank.

The specified recognition time in all embodiments of the present disclosure may be flexibly set according to actual requirements, and may also be set based on the duration, type, and the like. of the video to be recognized. For example, for a medium-length video or a long-form video, prediction may be performed after the input of the video frame sequence ends; and for a video stream in a live streaming scenario, prediction may be performed every N minutes at regular intervals, and so on.

That is, after the input of the video to be recognized ends, an audit for the video to be recognized may be triggered. In this case, all video frames of the video to be recognized are encoded and inputted into the MB, and the MB performs compression once or multiple times, and finally, the features of each video frame in the video to be recognized are compressed into a feature sequence of a fixed length, which may then be outputted. Correspondingly, the specified recognition time refers to the time when feature compression is completed.

In addition, during the continuous input process of the video to be recognized, each time a specified recognition time is reached, an audit for the video to be recognized is triggered. In this case, the feature sequence outputted by the MB in each audit is obtained by further compressing, based on the input video frames within the time period, the feature sequence outputted in the previous audit.

The above-listed several audit modes are merely simple examples. Besides these, other audit modes are also applicable to all embodiments of the present disclosure, which will not be described one by one herein.

In the above implementation, by setting a specified recognition time and triggering the subsequent tag recognition process only when the specified recognition time is reached, it is possible to prevent the model from performing video tag recognition all the time, thereby causing unnecessary resource waste. In addition, the specified recognition time may be flexibly set by a user, making video tag recognition more flexible.

Operation S92: Concatenate a global query feature and a local query feature, and extract a self-attention feature using a self-attention mechanism, the global query feature and the local query feature being obtained by training learnable query features based on a sample video, and the self-attention feature fusing key information in the global query feature and the local query feature.

The global query feature is obtained by training a first learnable query feature, and the local query feature is obtained by training a second learnable query feature. The specific training process is as described above, which will not be repeated here.

The global query feature and the local query feature are obtained by training learnable query features based on a sample video. The specific training process is as follows: inputting a sample video into a video tag recognition model to be trained, encoding each video frame in the sample video respectively to construct a global feature set and a local feature set, compressing the global feature set and the local feature set based on feature similarity to obtain a global feature sequence and a local feature sequence of a preset storage quantity; concatenating a first learnable query feature to be trained and a second learnable query feature to be trained, and extracting a self-attention feature using a self-attention mechanism; extracting, using a cross-attention mechanism, a first cross-attention feature between the self-attention feature and each global feature in the global feature sequence, and a second cross-attention feature between the self-attention feature and each local feature in the local feature sequence respectively; and adjusting, based on a difference between a video tag and video text description information of the sample video predicted based on obtained first cross-attention features and second cross-attention features, and corresponding sample labels, parameters of the first learnable query feature and the second learnable query feature, and performing multiple iterations of training until an iteration termination condition is satisfied, to obtain the global query feature and the local query feature.

Similar to the training process, in this operation, the query transformer in the video tag recognition model may be used for implementation. The query transformer includes a self-attention network and two parallel cross-attention networks. The concatenation result of the global query feature and the local query feature is used as an input to the self-attention network in the query transformer. This process allows the global feature query sequence to capture local details while enabling the local feature query sequence to obtain global context, ultimately generating a fused feature representation that is both detailed and broad in view.

As shown in FIG. 12, the figure is a schematic diagram of a computation process of an attention mechanism according to an embodiment of the present disclosure. The attention mechanism allows a model to focus on different parts of an input sequence, so as to better capture contextual information. Specifically, the left part of FIG. 12 shows three matrix multiplication operations, corresponding to a Query matrix, a Key matrix, and a Value matrix in the attention mechanism, respectively. The results of these matrix multiplications are Q, K, and V matrices, which are all of the same size. These matrix multiplications are obtained by multiplying an input matrix X by weight matrices Wq, Wk, and Wv, respectively. Among them, these three weight matrices are trainable parameters and used to extract features.

The formula on the right shows the computation process of the attention mechanism. First, a dot product (inner product) of the Q matrix and the K matrix is computed, and normalized by a softmax function to form an attention score matrix, where, dₖ is the dimension of the Key, which is generally used to scale the dot-product attention scores to help gradients flow through the network. This normalized attention score matrix represents the similarity between a query vector at each position and a key vector at each position. Then, the attention score matrix is multiplied by the V matrix to obtain a final attention output Z. This output contains information from all positions in the input, but the weights are assigned according to the attention scores. Therefore, a position of a key vector that is most relevant to a query vector will have a higher weight. This process may be repeated multiple times to form multi-head attention, where each head generates an attention output, allowing the model to focus on different aspects of the input, and the outputs are combined to enhance the expressiveness and generalization ability of the model. Multi-head attention is an extended form of the attention mechanism, allowing the model to focus on different aspects of the input. In the present disclosure, the self-attention network and the cross-attention network may adopt a multi-head attention mechanism. The specific process is to repeat the computation process of the attention mechanism multiple times, with each head generating an attention output, and combining these outputs to enhance the expressiveness and generalization ability of the model. In the self-attention mechanism, an input matrix is multiplied by trainable weight matrices to obtain a Query matrix, a Key matrix, and a Value matrix. A series of operations are performed on these matrices to obtain an attention output, and combining multiple such head outputs results in a multi-head attention output.

In the self-attention network, the input X is the concatenation result of the global query feature and the local query feature, which may be expressed as X = concat (Q1, Q2). Wq, Wk, and Wv are weight matrices of the self-attention network. The output Z of the self-attention network is the self-attention feature in all embodiments of the present disclosure. When these weight matrices Wq, Wk, and Wv are initialized, the Xavier initialization method may be adopted. The core idea of Xavier initialization is to keep the variance of the input and the output consistent, avoiding the problems of gradient vanishing or gradient exploding during forward and backward propagation of a neural network. Specifically, for a fully connected layer having *nᵢₙ* inputs and *nₒᵤₜ* outputs, each element *wᵢⱼ* in the weight matrix may be randomly sampled from a uniform distribution $U \left(-\sqrt{\frac{6}{{n}_{in} + {n}_{out}}},\sqrt{\frac{6}{{n}_{in} + {n}_{out}}}\right)$. In the self-attention mechanism, initializing weight matrices by Xavier initialization enables the model to learn the relationship between input features more stably at the early stage of training.

The specific computation process of the attention mechanism is described as follows: First, the global query feature and the local query feature are concatenated to obtain an input matrix *X*, i.e., *X* = *concat*(*Q*₁,*Q*₂), where *Q*₁ is the global query feature and *Q*₂ is the local query feature. Then, the input matrix *X* is multiplied by trainable weight matrices *W_{q}*, *Wₖ*, and *Wᵥ*, respectively, to obtain a query matrix *Q*, a key matrix *K*, and a value matrix *V*, i.e., *Q* = *XW_{q}, K = XWₖ*, *V = XWᵥ.* Next, a dot product (inner product) of the *Q* matrix and the *K* matrix is computed, and normalized by a softmax function to form an attention score matrix, where, *dₖ* is the dimension of the Key, which is generally used to scale the dot-product attention scores to help gradients flow through the network. This normalized attention score matrix represents the similarity between a query vector at each position and a key vector at each position. The specific formula is: $Attention \left(Q, K, V\right) = softmax \left(\frac{{QK}^{T}}{\sqrt{{d}_{k}}}\right) V$. Finally, the attention score matrix is multiplied by the *V* matrix to obtain a final attention output *Z*, and this output *Z* is the self-attention feature. This process may be repeated multiple times to form multi-head attention, where each head generates an attention output, allowing the model to focus on different aspects of the input, and the outputs are combined to enhance the expressiveness and generalization ability of the model.

Operation S93: Extract, using a cross-attention mechanism, a first cross-attention feature between the self-attention feature and each global feature in the global feature sequence, and a second cross-attention feature between the self-attention feature and each local feature in the local feature sequence respectively.

Since the self-attention feature obtained in operation S92 is obtained based on concatenating the global query feature and the local query feature, in S93, the query transformer in the video tag recognition model may similarly be used for implementation. The two cross-attention networks in the query transformer may be denoted as: a first cross-attention network (corresponding to global features) and a second cross-attention network (corresponding to local features). Then, operation S93 may be implemented according to the flowchart shown below, including the following operations S931 to S933 (not shown in FIG. 9):

Operation S931: Split the self-attention feature into a first self-attention feature corresponding to the global feature and a second self-attention feature corresponding to the local feature.

Similar to the training process, before extracting the cross-attention features, the self-attention feature obtained in operation S92 above is first split into two parts, denoted as a first self-attention feature and a second self-attention feature.

Operation S932: Extract, using a first cross-attention network in a query transformer and based on the cross-attention mechanism, the first cross-attention feature between the first self-attention feature and each global feature in the global feature sequence respectively.

Specifically, in the first cross-attention network, there are two inputs: one is the global feature, and the other is the first self-attention feature. Corresponding to FIG. 12, there are two instances of X, where, the X in the first matrix multiplication on the left side may be understood as the first cross-attention feature, generating the Q matrix; and the X in the second and third matrix multiplications on the left side may be understood as the global feature, generating the K and V matrices. Based on the first self-attention feature that fuses key information in the global query feature and the local query feature, an attempt is made to extract relevant information from the global feature. At this point, the output Z is the first cross-attention feature in all embodiments of the present disclosure.

Operation S933: Extract, using a second cross-attention network in the query transformer and based on the cross-attention mechanism, the second cross-attention feature between the second self-attention feature and each local feature in the local feature sequence respectively.

Similar to operation S932, operations S933 and S932 are implemented through two parallel cross-attention networks, and the specific execution process is similar. The second cross-attention network also has two inputs: one is the local feature, and the other is the second self-attention feature. Corresponding to FIG. 12, there are two instances of X, where, the X in the second matrix multiplication on the left side may be understood as the second cross-attention feature, generating the Q matrix; and the X in the second and third matrix multiplications on the left side may be understood as the local feature, generating the K and V matrices. Based on the second self-attention feature that fuses key information in the global query feature and the local query feature, an attempt is made to extract relevant information from the local feature. At this point, the output Z is the second cross-attention feature in all embodiments of the present disclosure.

In the above implementation, in the self-attention module, the global feature query sequence and the local feature query sequence can "see" each other, enabling interaction between the two types of features, thereby obtaining a self-attention feature that simultaneously fuses key information in the global query feature and the local query feature. On this basis, the self-attention feature is split and inputted into corresponding cross-attention modules. Two parallel cross-attention modules are used to process the global features and the local features respectively, ensuring that when extracting relevant information from the global features, attention is also paid to the local features, and when extracting relevant information from the local features, attention is also paid to the global features, so as to extract more comprehensive first cross-attention features and second cross-attention features. In addition, further compression through cross-attention can result in a more compact visual token sequence.

The process of extracting, using a cross-attention mechanism, a first cross-attention feature between the self-attention feature and each global feature in the global feature sequence, and a second cross-attention feature between the self-attention feature and each local feature in the local feature sequence respectively is specifically as follows: first, splitting the self-attention feature into a first self-attention feature *Q*_{*self*1} corresponding to the global feature and a second self-attention feature *Q*_{*self*2} corresponding to the local feature. For extracting the first cross-attention feature, the first self-attention feature *Q*_{*self*1} is multiplied by a weight matrix *W*_{*q*1} to obtain a query matrix *Q*₁*,* i.e., *Q*₁ *= Q*_{*self*1}*W*_{*q*1}*.* Each global feature *F_{glob}* in the global feature sequence is multiplied by weight matrices *W*_{*k*1} and *W*_{*v*1} respectively to obtain a key matrix *K*₁ and a value matrix *V*₁, i.e., *K*₁ *= F_{glob}W*_{*k*1}, *V*₁ *= F_{glob}W*_{*v*1}*.* Then, a dot product (inner product) of the *Q*₁ matrix and the *K*₁ matrix is computed, and normalized by a softmax function to form an attention score matrix, with the formula: ${Attention}_{score 1} = softmax \left(\frac{{Q}_{1} {K}_{1}^{T}}{\sqrt{{d}_{k 1}}}\right)$*,* where *d*_{*k*1} is the dimension of the Key and is used to scale the dot-product attention score. Then, the attention score matrix is multiplied by the *V*₁ matrix to obtain a first cross-attention feature *Z*₁, i.e., *Z*₁ *= Attention*_{*score*1}*V*₁. The extraction of the second cross-attention feature is similar. The second self-attention feature *Q*_{*self*2} is multiplied by a weight matrix *W*_{*q*2} to obtain a query matrix *Q*₂. Each local feature *F_{loc}* in the local feature sequence is multiplied by weight matrices *W*_{*k*2} and *W*_{*v*2} respectively to obtain a key matrix *K*₂ and a value matrix *V*₂. Then, the second cross-attention feature *Z*₂ is obtained through dot product, normalization, and multiplication operations.

In all embodiments of the present disclosure, the query transformer serves as a bridge connecting non-text tokens and the LLM, and is capable of converting inputs from different modalities into tokens that can be understood by the LLM. Then, based on this, video tag prediction can be performed through the LLM. The specific process is as follows:

Operation S94: Recognize, based on obtained first cross-attention features and second cross-attention features, a video tag of the video to be recognized.

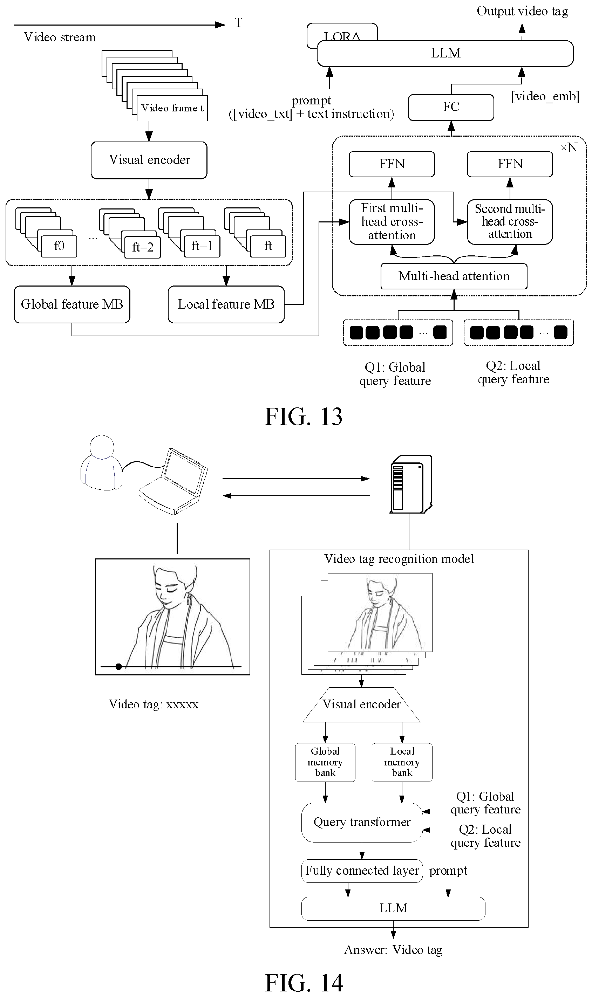

The MLLM in all embodiments of the present disclosure uses two modalities, namely a visual modality and a text modality. As shown in FIG. 13, after each video frame in the video to be recognized (video stream) in all embodiments of the present disclosure is encoded by the visual encoder, two types of features of the visual modality can be obtained, including global features and local features. Then, the global features are compressed by the global feature MB, and the local features are compressed by the local feature MB. After that, further fusion and compression are performed through the multi-head self-attention and multi-head cross-attention in the query transformer to obtain the first cross-attention features and the second cross-attention features. After concatenation, dimension conversion is performed through the FC layer to obtain the final visual token, denoted as [video_emb], i.e., the visual feature in the present disclosure. For specific implementation, reference may be made to the above embodiments, which will not be repeated here. In addition to the video title, the features of the text modality may also include description text, key text extracted from OCR/ASR, and the like, denoted as [video_txt], i.e., the text feature in the present disclosure.

Using [video_txt] and a text instruction as a prompt, and inputting [video_emb] into the LLM in conjunction with the prompt, the predicted tag result can be generated.

The video tag recognition model illustrated in FIG. 13 is obtained by training based on the structure shown in FIG. 8, and thus also includes an LoRA module.

In summary, in an exemplary implementation, operation S94 may be implemented as follows:
concatenating the first cross-attention features and the second cross-attention features, and converting concatenated features into a visual feature aligned with a dimension of a text feature of the video to be recognized; and, using the text feature of the video to be recognized and a text instruction as question-answering prompt information, and inputting the visual feature into the large language model in conjunction with the question-answering prompt information to generate the video tag of the video to be recognized.

Specifically, the dimension conversion of the feature may be implemented through a fully connected layer. The fully connected layer may be located in the query transformer as an output of the query transformer, or may serve as an independent feature dimension conversion layer, which is not specifically limited herein. As shown in FIG. 13, after the FFN in the query transformer outputs the first cross-attention features and the second cross-attention features, the features then pass through the FC layer to perform dimension alignment between [video_emb] and [video_txt]. After concatenating the first cross-attention features and the second cross-attention features, the concatenated features are converted by a fully connected layer into a visual feature aligned with a dimension of a text feature of the video to be recognized.

The fully connected layer is a component configured to perform dimension alignment on features of different modalities. In the video tag recognition model of the present disclosure, since the dimensions of the visual tokens outputted by the query transformer and the text tokens may not be the same, the dimension of the visual feature and the dimension of the text feature may be aligned through the fully connected layer. The fully connected layer may be considered as a part of the query transformer and connected to an output of a last decoder in the query transformer; or may be regarded as an independent part between the query transformer and the large language model. The calculation formula of the fully connected layer is: *y = Wx* + *b*, where *x* represents the input concatenated first cross-attention features and second cross-attention features, *w* represents a weight matrix of the fully connected layer, *b* represents a bias vector, and *y* represents the output visual feature.

The text feature [video_txt] of the video to be recognized refers to a feature obtained by encoding the video text description information of the video to be recognized. The video text description information includes, but is not limited to, a video title, description text, key text extracted by OCR, subtitles or transcriptions generated by ASR, comments and forum discussions, metadata information, etc. For details, reference may be made to the relevant description in the model training part, which will not be repeated here.

After the visual feature and the text feature are aligned, they may be inputted into the large language model. Here, the text feature and a text instruction are used as question-answering prompt information for the large language model. Since the LLM is desired to output a video tag, the text instruction here may adopt one of the following statements:

"What tags can be used to summarize the above video?", "Please output some key content tags based on the content of the above video", "Generate main content tags based on the content of the above video", and so on, which is not specifically limited herein.

In the above implementation, through feature dimension alignment, the representation spaces of different modalities may be unified, so as to effectively fuse and understand cross-modal information, narrow the representation differences between modalities, enable the LLM to process diverse data in the same semantic space, promote knowledge transfer, and enhance generalization ability, thereby improving the effect of video tag recognition.

In all embodiments of the present disclosure, the query transformer includes a plurality of stacked decoders. For a first decoder, input features include the global feature sequence and the local feature sequence; and for other decoders, input features include the first cross-attention features and the second cross-attention features outputted by a preceding decoder. The specific implementation is the same as the training process, and reference may be made to the relevant description in the training part above, which will not be repeated here. On this basis, in an exemplary implementation, operation S94 may be implemented as: recognizing, based on first cross-attention features and second cross-attention features outputted by a last decoder, the video tag of the video to be recognized.

Still taking the example shown in FIG. 5, an input of 502 in Decoder 1 is the global features outputted by the global memory bank, and an input of 503 in Decoder 1 is the local features outputted by the local memory bank; an input of 502 in Decoder 2 is the first cross-attention features outputted by 504 in Decoder 1, and an input of 503 in Decoder 2 is the second cross-attention features outputted by 505 in Decoder 1; ...; and an input of 502 in Decoder 5 is the first cross-attention features outputted by 504 in Decoder 4, and an input of 503 in Decoder 5 is the second cross-attention features outputted by 505 in Decoder 4. Finally, after concatenating the outputs of 504 and 505 in Decoder 5 and performing dimension alignment through the FC, the concatenated features may be inputted into the LLM in conjunction with a prompt to obtain a corresponding video tag.

In the multi-layer stacked decoder structure listed above, between each layer, the global features and the local features are fused through self-attention, and further compressed through cross-attention, so that a more compact visual token sequence can be obtained. Extracting video tags on this basis can further reduce the computational load of the LLM and improve recognition efficiency.

Referring to FIG. 14, which is a schematic diagram of an interaction logic between a terminal device and a server according to an embodiment of the present disclosure.

A client related to video tag recognition may be installed on the terminal device. A user may determine, based on the client, a video to be recognized, such as a TV series in FIG. 14, and transmit the video to be recognized to the server through the terminal device. The server 120 side has a pre-deployed trained video tag recognition model. Then, the server uses the video tag recognition method according to the embodiments of the present disclosure to recognize, based on the video tag recognition model, a video tag of the video to be recognized. For a specific recognition process, reference may be made to the above embodiments, which will not be repeated here. Finally, the server may return the recognized video tag to the terminal device, and the terminal device presents the video tag to the user through the client.

FIG. 14 takes a long-form video as an example. Besides this, the video to be recognized may also be a live video. In this case, during the live broadcast, video tag recognition may be performed every 5 minutes, and so on.

In summary, the implementation method of the present disclosure is simple, is applicable to mainstream multimodal models, and can effectively compress visual features of various types of videos, reduce information loss, reduce the cost and improve machine auditing efficiency.

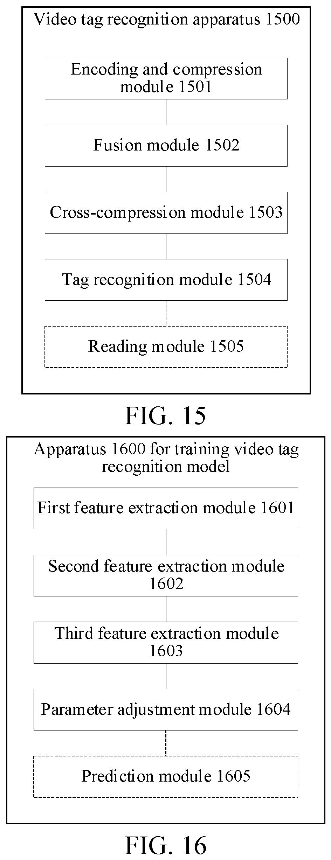

Based on the same inventive concept, the embodiments of the present disclosure further provide a video tag recognition apparatus. As shown in FIG. 15, the figure is a schematic structural diagram of a video tag recognition apparatus 1500, and the apparatus may include:
an encoding and compression module 1501, configured to encode, using a video tag recognition model, each video frame in a video to be recognized respectively to construct a global feature set including global features of video frames obtained by the encoding, and a local feature set including local features of the video frames obtained by the encoding; compress, based on a feature similarity between the global features in the global feature set, the global feature set to obtain a global feature sequence of a preset storage quantity; and compress, based on a feature similarity between the local features in the local feature set, the local feature set to obtain a local feature sequence of a preset storage quantity;
a fusion module 1502, configured to concatenate a global query feature and a local query feature (obtained by pre-training), and extract a self-attention feature using a self-attention mechanism, the global query feature and the local query feature being obtained by training learnable query features based on a sample video, and the self-attention feature fusing key information in the global query feature and the local query feature;
a cross-compression module 1503, configured to extract, using a cross-attention mechanism, a first cross-attention feature between the self-attention feature and each global feature in the global feature sequence, and a second cross-attention feature between the self-attention feature and each local feature in the local feature sequence respectively; and
a tag recognition module 1504, configured to: recognize, based on obtained first cross-attention features and second cross-attention features, a video tag of the video to be recognized.

In all embodiments of the present disclosure, the video tag recognition model includes a query transformer; and the cross-compression module 1503 is specifically configured to:
split the self-attention feature into a first self-attention feature corresponding to the global feature and a second self-attention feature corresponding to the local feature;
extract, using a first cross-attention network in the query transformer and based on the cross-attention mechanism, the first cross-attention feature between the first self-attention feature and each global feature in the global feature sequence; and
extract, using a second cross-attention network in the query transformer and based on the cross-attention mechanism, the second cross-attention feature between the second self-attention feature and each local feature in the local feature sequence.

In all embodiments of the present disclosure, the query transformer includes a plurality of stacked decoders. For a first decoder, input features include the global feature sequence and the local feature sequence; for other decoders, input features include the first cross-attention features and the second cross-attention features outputted by a preceding decoder; and
the tag recognition module 1504 is specifically configured to:
recognize, based on first cross-attention features and second cross-attention features outputted by a last decoder, the video tag of the video to be recognized.

In all embodiments of the present disclosure, the video tag recognition model includes a large language model; the tag recognition module 1504 is specifically configured to:
concatenate the first cross-attention features and the second cross-attention features, and convert concatenated features into a visual feature aligned with a dimension of a text feature of the video to be recognized; and
use the text feature of the video to be recognized and a text instruction as question-answering prompt information, and input the visual feature into the large language model in conjunction with the question-answering prompt information to generate the video tag of the video to be recognized.

In all embodiments of the present disclosure, each local feature corresponds to an image patch in a video frame. The encoding and compression module 1501 is specifically configured to:
store, each time a video frame is encoded, the global features of the video frame into a global memory bank, and store the local features of the video frame into a local memory bank;
fuse, when a number of global features stored in the global memory bank reaches the preset storage quantity, global features of at least two video frames into a global feature of one video frame based on a feature similarity between the global features stored in the global memory bank and global features of a plurality of groups of video frames among global features to be stored, so as to adjust the global features stored in the global memory bank, so that the number of global features is less than or equal to the preset storage quantity; and
perform feature fusion, for each image patch, when a number of corresponding local features stored in the local memory bank reaches the preset storage quantity, on corresponding local features of at least two video frames in the local memory bank based on a feature similarity between the local features in the local memory bank, so that the number of local features stored in the local memory bank is less than or equal to the preset storage quantity.

In all embodiments of the present disclosure, the apparatus further includes:
a reading module 1505, configured to, before the cross-compression module 1503 extracts, using a cross-attention mechanism, a first cross-attention feature between the self-attention feature and each global feature in the global feature sequence, and a second cross-attention feature between the self-attention feature and each local feature in the local feature sequence respectively, determine that a specified recognition time is reached, then read the global feature sequence stored in the global memory bank, and read the local feature sequence stored in the local memory bank.

In all embodiments of the present disclosure, the encoding and compression module 1501 is further configured to perform feature fusion on target features of at least two video frames in any of the following modes:
performing average pooling on target features of the most similar adjacent video frames in a memory bank based on a feature similarity; and
clustering, based on a feature similarity, target features to be stored with target features already stored in a memory bank, and performing average pooling on clustered target features of video frames.

The target features are global features or local features, and correspondingly, the memory bank is a global memory bank or a local memory bank.

In all embodiments of the present disclosure, if a plurality of most similar groups of adjacent video frames exist, the encoding and compression module 1501 is specifically configured to:
perform average pooling on target features of adjacent video frames that have the longest storage duration and are most similar in the memory bank; or
perform average pooling on target features of each group of most similar adjacent video frames in the memory bank respectively.

Based on the same inventive concept, an embodiment of the present disclosure further provides an apparatus for training a video tag recognition model. As shown in FIG. 16, the figure is a schematic structural diagram of an apparatus 1600 for training a video tag recognition model, and the apparatus may include:
a first feature extraction module 1601, configured to encode, using a video tag recognition model to be trained, each video frame in a sample video respectively to construct a global feature set including global features of video frames obtained by the encoding, and a local feature set including local features of the video frames obtained by the encoding; compress, based on a feature similarity between the global features in the global feature set, the global feature set to obtain a global feature sequence of a preset storage quantity; and compress, based on a feature similarity between the local features in the local feature set, the local feature set to obtain a local feature sequence of a preset storage quantity;
a second feature extraction module 1602, configured to concatenate a first learnable query feature to be trained and a second learnable query feature to be trained, and extract a self-attention feature using a self-attention mechanism, the self-attention feature fusing key information in the first learnable query feature and the second learnable query feature;
a third feature extraction module 1603, configured to extract, using a cross-attention mechanism, a first cross-attention feature between the self-attention feature and each global feature in the global feature sequence, and a second cross-attention feature between the self-attention feature and each local feature in the local feature sequence respectively; and
a parameter adjustment module 1604, configured to adjust, based on a difference between a video tag and video text description information of the sample video predicted based on obtained first cross-attention features and second cross-attention features, and corresponding sample labels, parameters of the video tag recognition model, a trained video tag recognition model being configured to extract a video tag of a video to be recognized.

In all embodiments of the present disclosure, the video tag recognition model includes a large language model, and a query transformer implemented based on a self-attention mechanism and a cross-attention mechanism, the query transformer being configured to extract the first cross-attention features and the second cross-attention features; the apparatus further includes:
a prediction module 1605, configured to, concatenate, in a first training stage, first cross-attention features and second cross-attention features, and convert concatenated features into a visual feature aligned with a dimension of a text feature of the sample video; use a first text instruction as question-answering prompt information, and input the visual feature into the large language model in conjunction with the question-answering prompt information to generate the video text description information of the sample video; and
concatenating, in the second training stage, first cross-attention features and second cross-attention features, and converting concatenated features into a visual feature aligned with a dimension of a text feature of the sample video; and use the text feature and a second text instruction as question-answering prompt information, and input the visual feature into the large language model in conjunction with the question-answering prompt information to generate the video tag of the sample video.

In all embodiments of the present disclosure, the parameter adjustment module 1604 is specifically configured to:
update, in the first training stage, parameters of the query transformer based on a difference between the predicted video text description information and video text description information in the sample labels; and
update, in the second training stage, parameters of the query transformer and the large language model based on a difference between the predicted video tag and a video tag in the sample labels.

In all embodiments of the present disclosure, the parameter adjustment module 1604 is further configured to perform parameter update for the large language model in the following mode:
fixing original parameters of the large language model, and adding a low-rank adaptation matrix to the large language model; and
updating parameters of the low-rank adaptation matrix to perform parameter update for the large language model.

According to the present disclosure, when extracting visual features of a video to be recognized through a video tag recognition model, frame sampling is not performed. Instead, each video frame in the video to be recognized is encoded. After encoding, a global feature set including global features of the video frames and a local feature set including local features of the video frames can be obtained. On this basis, based on feature similarity, the obtained global feature set and local feature set are compressed respectively. Specifically, global features of some video frames are fused, and local features of some video frames are fused, to obtain a global feature sequence and a local feature sequence of a preset storage quantity. Through the above operations, it can be ensured that global feature sequences and local feature sequences at this time can cover most of the content of the video to be recognized. On this basis, key information in the global query feature and the local query feature is fused through a self-attention mechanism, which is then further compressed through a cross-attention mechanism, resulting in a more compact visual feature sequence.

The above approach can effectively compress visual features of medium-length videos and long-form videos, reduce information loss, and at the same time improve tag recognition efficiency by compressing features, thereby achieving efficient and accurate recognition of video tags of medium-length videos and long-form videos.

For ease of description, the above parts are divided into modules (or units) according to their functions and described separately. Of course, when implementing the present disclosure, the functions of the modules (or units) may be implemented in one or more pieces of software or hardware.

In all embodiments of the present disclosure, the term "module" or "unit" refers to a computer program or a part of a computer program having predetermined functions, works together with other related parts to achieve predetermined goals, and may be implemented in whole or in part by using software, hardware (such as a processing circuit or a memory), or a combination thereof. Similarly, one processor (or a plurality of processors or memories) may be configured to implement one or more modules or units. In addition, each module or unit may be a part of an overall module or unit including a function of the module or unit.

After introducing the video tag recognition method and apparatus according to the exemplary implementations of the present disclosure, an electronic device according to another exemplary implementation of the present disclosure is introduced next.

Those skilled in the art will appreciate that various aspects of the present disclosure may be implemented as a system, a method, or a program product. Accordingly, various aspects of the present disclosure may be embodied in the following forms, namely: a complete hardware implementation, a complete software implementation (including firmware, microcode, etc.), or an implementation combining hardware and software, which may be collectively referred to herein as a "circuit", "module", or "system".

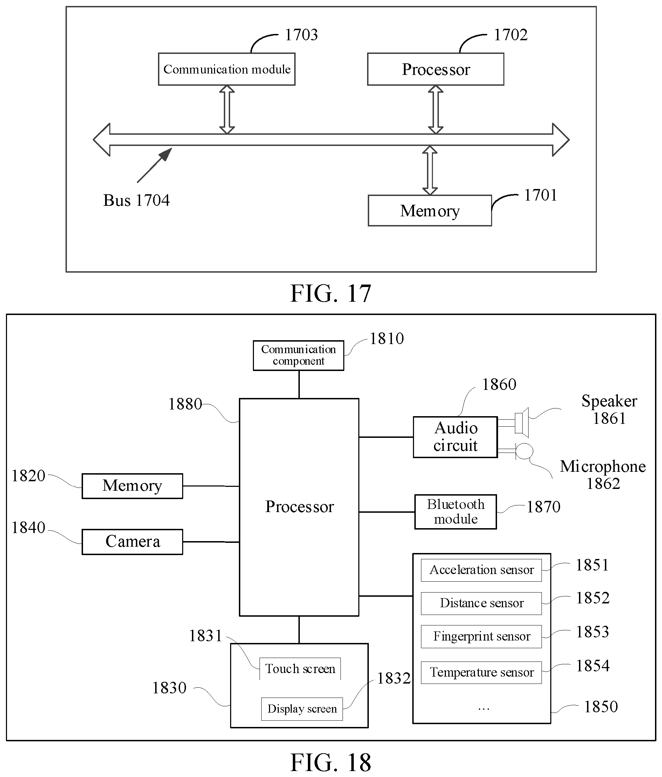

Based on the same inventive concept as the above method embodiments, an embodiment of the present disclosure further provides an electronic device. In all embodiments of the present disclosure, the electronic device may be a server, such as the server 120 shown in FIG. 1. In all embodiments of the present disclosure, the structure of the electronic device may be as shown in FIG. 17, including a memory 1701, a communication module 1703, and one or more processors 1702.

The memory 1701 is configured to store a computer program to be executed by the processor 1702. The memory 1701 may mainly include a program storage area and a data storage area. The program storage area may store an operating system, programs required for running instant messaging functions, and the like. The data storage area may store various instant messaging information, operation instruction sets, and the like.

The memory 1701 may be a volatile memory, such as a random-access memory (RAM). The memory 1701 may also be a non-volatile memory, such as a read-only memory, a flash memory, a hard disk drive (HDD), or a solid-state drive (SSD). Alternatively, the memory 1701 may be any other medium capable of carrying or storing a desired computer program in the form of instructions or data structures and capable of being accessed by a computer, but is not limited thereto. The memory 1701 may be a combination of the above-mentioned memories.

The processor 1702 may include one or more central processing units (CPUs) or may be a digital processing unit, etc. The processor 1702 is configured to implement the above video tag recognition method when calling the computer program stored in the memory 1701.

The communication module 1703 is configured to communicate with a terminal device and other servers.

The specific connection medium among the above memory 1701, the communication module 1703, and the processor 1702 is not limited in all embodiments of the present disclosure. In FIG. 17, the embodiment of the present disclosure illustrates that the memory 1701 and the processor 1702 are connected through a bus 1704. The bus 1704 is depicted in FIG. 17 as a thick line. The connection modes among other components are merely illustrative and are not intended to be limiting. The bus 1704 may be divided into an address bus, a data bus, a control bus, etc. For ease of description, only one thick line is used in FIG. 17, but this does not mean that there is only one bus or one type of bus.

The memory 1701 stores a computer storage medium, and the computer storage medium stores computer-executable instructions. The computer-executable instructions are configured to implement the video tag recognition method or the method for training the video tag recognition model according to the embodiments of the present disclosure. The processor 1702 is configured to execute the above video tag recognition method or the method for training the video tag recognition model, as shown in FIG. 3 or FIG. 9.

In another embodiment, the electronic device may also be another electronic device, such as the terminal device 110 shown in FIG. 1. In this embodiment, the structure of the electronic device may be as shown in FIG. 18, including components such as a communication component 1810, a memory 1820, a display unit 1830, a camera 1840, a sensor 1850, an audio circuit 1860, a Bluetooth module 1870, and a processor 1880.

The communication component 1810 is configured to communicate with a server. In all embodiments of the present disclosure, it may include a Wireless Fidelity (WiFi) module. The WiFi module belongs to short-range wireless transmission technology. The electronic device can help a user transmit and receive information through the WiFi module.

The memory 1820 may be configured to store software programs and data. The processor 1880 executes various functions of the terminal device 110 and performs data processing by running the software programs or data stored in the memory 1820. The memory 1820 may include a high-speed random-access memory, and may also include a non-volatile memory, such as at least one magnetic disk storage device, a flash memory device, or other volatile solid-state storage devices. The memory 1820 stores an operating system that enables the terminal device 110 to run. In the present disclosure, the memory 1820 may store an operating system and various application programs, and may also store a computer program for executing the video tag recognition method according to the embodiments of the present disclosure.

The display unit 1830 may also be configured to display information inputted by a user or information provided to a user, as well as a graphical user interface (GUI) of various menus of the terminal device 110. Specifically, the display unit 1830 may include a display screen 1832 disposed on the front side of the terminal device 110. The display screen 1832 may be configured in the form of a liquid crystal display, a light emitting diode, or the like. The display unit 1830 may be configured to display a video interface in all embodiments of the present disclosure, etc.

The display unit 1830 may also be configured to receive input numeric or character information, and generate signal inputs related to user settings and function control of the terminal device 110. Specifically, the display unit 1830 may include a touch screen 1831 disposed on the front side of the terminal device 110, which can collect a user's touch operation on or near it, such as tapping a button, and dragging a scroll box.

The touch screen 1831 may be disposed over the display screen 1832, or the touch screen 1831 and the display screen 1832 may be integrated to implement the input and output functions of the terminal device 110, and after integration, may be referred to as a touch display screen for short. In the present disclosure, the display unit 1830 may display an application program and corresponding operation sequences.

The camera 1840 may be configured to capture still images, and a user may publish images captured by the camera 1840 through an application. The camera 1840 may be one or more in number. An object generates an optical image through a lens and projects the optical image onto a photosensitive element. The photosensitive element may be a charge coupled device (CCD) or a complementary metal-oxide-semiconductor (CMOS) phototransistor. The photosensitive element converts an optical signal into an electrical signal, and transmits the electrical signal to the processor 1880 to be converted into a digital image signal.

The terminal device may further include at least one sensor 1850, such as an acceleration sensor 1851, a distance sensor 1852, a fingerprint sensor 1853, and a temperature sensor 1854. The terminal device may also be configured with other sensors such as a gyroscope, a barometer, a hygrometer, a thermometer, an infrared sensor, a light sensor, and a motion sensor.

The audio circuit 1860, the speaker 1861, and the microphone 1862 may provide an audio interface between a user and the terminal device 110. The audio circuit 1860 may transmit an electrical signal converted from received audio data to the speaker 1861, and the speaker 1861 may convert the electrical signal into a sound signal for output. The terminal device 110 may also be configured with a volume button for adjusting the volume of the sound signal. On the other hand, the microphone 1862 converts a collected sound signal into an electrical signal, which is received by the audio circuit 1860 and converted into audio data. The audio data is then outputted to the communication component 1810 to be transmitted to, for example, another terminal device 110, or outputted to the memory 1820 for further processing.

The Bluetooth module 1870 is configured to exchange information with other Bluetooth devices having a Bluetooth module through a Bluetooth protocol. For example, the terminal device may establish a Bluetooth connection with a wearable electronic device (e.g., a smart watch) also having a Bluetooth module through the Bluetooth module 1870, thereby performing data exchange.

The processor 1880 is a control center of the terminal device, connecting various parts of the entire terminal using various interfaces and lines, and executing various functions of the terminal device and performing data processing by running or executing software programs stored in the memory 1820 and calling data stored in the memory 1820. In all embodiments of the present disclosure, the processor 1880 may include one or more processing units. The processor 1880 may also integrate an application processor and a baseband processor. The application processor mainly processes an operating system, a user interface, an application program, etc. The baseband processor mainly processes wireless communication. The above-described baseband processor may not be integrated into the processor 1880. In the present disclosure, the processor 1880 may run an operating system, an application program, user interface display and touch response, and the video tag recognition method or the method for training the video tag recognition model according to the embodiments of the present disclosure. In addition, the processor 1880 is coupled to the display unit 1830.

In some exemplary implementations, various aspects of the video tag recognition method provided in the present disclosure may also be implemented in the form of a program product, which includes a computer program. When the program product is run on an electronic device, the computer program is configured to cause the electronic device to perform the operations of the video tag recognition method according to the various exemplary implementations of the present disclosure described above in this specification. For example, the electronic device may perform the operations shown in FIG. 3 or FIG. 9.

The program product may employ any combination of one or more readable media. A readable medium may be a readable signal medium or a readable storage medium. A readable storage medium may be, for example, but is not limited to, an electrical, magnetic, optical, electromagnetic, infrared, or semiconductor system, apparatus, or device, or any combination thereof. More specific examples (a non-exhaustive list) of the readable storage medium include: an electrical connection having one or more wires, a portable disk, a hard disk, a random access memory (RAM), a read-only memory (ROM), an erasable programmable read-only memory (EPROM or flash memory), an optical fiber, a portable compact disk read-only memory (CD-ROM), an optical storage device, a magnetic storage device, or any suitable combination thereof.

The program product of the implementations of the present disclosure may employ a portable compact disk read-only memory (CD-ROM) and include a computer program, and may be run on an electronic device. However, the program product of the present disclosure is not limited thereto. In this document, a readable storage medium may be any tangible medium that contains or stores a program, and the program may be used by or in conjunction with an instruction execution system, apparatus, or device.

A readable signal medium may include a data signal propagated in a baseband or as part of a carrier wave, carrying a readable computer program therein. Such a propagated data signal may take a variety of forms, including but not limited to an electromagnetic signal, an optical signal, or any suitable combination thereof. A readable signal medium may also be any readable medium that is not a readable storage medium, and that can transmit, propagate, or transport a program for use by or in conjunction with an instruction execution system, apparatus, or device.

A computer program embodied on a readable medium may be transmitted using any appropriate medium, including but not limited to wireless medium, wired medium, optical fiber cable, RF, or any suitable combination thereof.

A computer program for performing operations of the present disclosure may be written in any combination of one or more programming languages, including object-oriented programming languages such as Java and C++, and conventional procedural programming languages such as the "C" programming language or similar programming languages. The computer program may be executed entirely on a user's electronic device, partially on a user's electronic device, as a stand-alone software package, partially on a user's electronic device and partially on a remote electronic device, or entirely on a remote electronic device or a server. In situations involving a remote electronic device, the remote electronic device may be connected to a user's electronic device through any kind of network, including a local area network (LAN) or a wide area network (WAN), or may be connected to an external electronic device (e.g., for connection through the Internet using an Internet service provider).

In summary, the present disclosure provides a video tag recognition method and apparatus, a device, a computer-readable storage medium, and a computer program product. Each video frame in a video to be recognized is encoded respectively by a video tag recognition model to construct a global feature set and a local feature set. Traditional sparse frame sampling makes it difficult to cover most of the content of a medium-length video or a long-form video, whereas the present method encodes each frame, enabling comprehensive capture of video information. Then, the two feature sets are compressed based on feature similarity to obtain a global feature sequence and a local feature sequence of a preset storage quantity. This process reduces data redundancy, avoids storing a large number of similar features, saves storage space, and conserves computing resources. After concatenating the global query feature and the local query feature obtained by pre-training, a self-attention mechanism is configured to extract a self-attention feature. The self-attention feature fuses key information in the global query feature and the local query feature, enabling the model to pay attention to both global context and capture local details, thereby enhancing the model's ability to understand complex features of a video. Then, a cross-attention mechanism is configured to extract cross-attention features between the self-attention feature and each feature in the global feature sequence and the local feature sequence respectively, further compressing the features to obtain a more compact visual feature sequence. Finally, based on these cross-attention features, the video tag of the video to be recognized is recognized. This method effectively compresses visual features of medium-length videos and long-form videos, reduces information loss, improves tag recognition efficiency, and achieves efficient and accurate recognition of video tags of medium-length videos and long-form videos.

Further, if the video tag recognition model includes a query transformer, when extracting the cross-attention features using the cross-attention mechanism, the self-attention feature is first split into a first self-attention feature corresponding to the global feature and a second self-attention feature corresponding to the local feature. Then, the first cross-attention feature and the second cross-attention feature are extracted through the first cross-attention network and the second cross-attention network in the query transformer respectively, based on the cross-attention mechanism. This splitting processing enables the model to focus on video features from both a global perspective and a local perspective respectively, avoiding information confusion, more accurately capturing features at different levels of the video, improving the accuracy and specificity of feature extraction, and thereby enhancing the effect of video tag recognition.

When the query transformer includes a plurality of stacked decoders, input features of a first decoder include the global feature sequence and the local feature sequence, and input features of other decoders include the first cross-attention features and the second cross-attention features outputted by a preceding decoder. The video tag of the video to be recognized is recognized based on the first cross-attention features and the second cross-attention features outputted by a last decoder. The multi-layer stacked decoder structure enables global features and local features to be fused through a self-attention mechanism between each layer, and further compressed through a cross-attention mechanism, continuously refining the features to obtain a more compact visual token sequence. This reduces the computational load of the large language model, because the input features are more concise and effective, and the large language model can process these features more quickly, thereby improving recognition efficiency.

If the video tag recognition model includes a large language model, when recognizing a video tag, the first cross-attention features and the second cross-attention features are concatenated and converted into a visual feature aligned with the dimension of a text feature of the video to be recognized. The text feature of the video to be recognized and a text instruction are then used as question-answering prompt information, and the visual feature is inputted into the large language model in conjunction with the question-answering prompt information to generate the video tag. Since the dimensions of features of different modalities may be different, dimension alignment is performed through a fully connected layer, unifying the representation spaces of different modalities and narrowing the representation differences between modalities. In this way, the large language model can process diverse data in the same semantic space, promoting knowledge transfer and enhancing the generalization ability of the model, thereby improving the effect of video tag recognition.

When each local feature corresponds to an image patch in a video frame, when compressing the global feature set and the local feature set, each time a video frame is encoded, the global features of the video frame are stored into a global memory bank, and the local features of the video frame are stored into a local memory bank. When the number of global features stored in the global memory bank reaches a preset storage quantity, global features of at least two video frames are fused into a global feature of one video frame based on feature similarity. For each image patch, when the number of corresponding local features stored in the local memory bank reaches the preset storage quantity, local features, at the image patch, of at least two video frames are similarly fused into a local feature, at the image patch, of one video frame based on feature similarity. By introducing two memory banks to store and compress global features and local features of a video frame sequence respectively, the global memory bank can capture macroscopic information of a video, while the local memory bank focuses on detail changes, and the two complement each other, thereby ensuring comprehensiveness of information while reducing redundancy, and improving storage efficiency and computational performance.

Before extracting cross-attention features using a cross-attention mechanism, after it is determined that a specified recognition time is reached, the global feature sequence stored in the global memory bank and the local feature sequence stored in the local memory bank are read. By setting a specified recognition time, unnecessary resource waste caused by the model performing video tag recognition all the time is avoided. For example, for a medium-length video or a long-form video, prediction may be performed after the input of the video frame sequence ends. For a live streaming scenario, prediction may be performed every N minutes at regular intervals. The specified recognition time may be flexibly set according to actual requirements, making video tag recognition more flexible.

Based on a feature similarity between the global features stored in the global memory bank and global features of a plurality of groups of adjacent video frames among global features to be stored, global features of at least one most similar group of adjacent video frames are fused by performing average pooling on a per-group basis to obtain a global feature of one video frame in each group. This average pooling mode based on feature similarity merges similar global features, reducing data redundancy and saving data storage space. At the same time, the average pooling operation can also reduce noise influence and improve feature stability, because it integrates information from multiple similar features, making the features more representative of the overall characteristics of a video.

If the global features of the plurality of groups of adjacent video frames have global features of a plurality of most similar groups of adjacent video frames, average pooling is performed on global features of a group of adjacent video frames that is most similar and includes a global feature having a longest storage duration, among the global features of the plurality of most similar groups of adjacent video frames. Compressing features of video frames having a longer storage duration based on the storage duration can, in addition to reducing data redundancy and saving data storage space, also free up more space for new data. Because features stored for a long time may no longer accurately reflect the latest state of a video, timely compressing these features can ensure the timeliness of video tag recognition results, enabling the model to process new video frame information more promptly.

Based on a feature similarity between the global features stored in the global memory bank and global features of a plurality of groups of video frames among global features to be stored, at least some of the global features stored in the global memory bank and the global features to be stored are clustered, and global features of at least two video frames clustered into one category are fused into a global feature of one video frame in the one category. Clustering global features based on feature similarity can group similar video frame features together, reducing repeated storage. Clustered features are more representative, can retain key information of a video, and simultaneously reduce unnecessary computation, improving storage and processing efficiency.

Based on a feature similarity between the local features stored in the local memory bank and local features, at the image patch, of a plurality of groups of adjacent video frames among local features to be stored, local features, at the image patch, of at least one most similar group of adjacent video frames are fused by performing average pooling on a per-group basis to obtain a local feature, at the image patch, of one video frame in each group. This mode compresses local features, reducing redundancy of local features and improving storage efficiency. At the same time, local features after average pooling are more representative of the features of the image patch, helping the model more accurately recognize local details in a video, thereby improving the accuracy of video tag recognition.

If the local features of the plurality of groups of adjacent video frames at the image patch have local features of a plurality of most similar groups of adjacent video frames at the image patch, average pooling is performed, on a per-group basis, on local features, at the image patch, of at least one group of adjacent video frames that is most similar and includes a local feature having a longest storage duration, among the local features, at the image patch, of the plurality of most similar groups of adjacent video frames. Compressing local features based on storage duration can free up space for new local features, ensuring the timeliness of video tag recognition. At the same time, redundancy of local features is reduced, enabling the model to focus more on valuable local features and improving the ability to recognize local details of a video.

Based on a feature similarity between the local features stored in the local memory bank and local features, at the image patch, of a plurality of groups of video frames among local features to be stored, at least some of the local features stored in the local memory bank and the local features to be stored are clustered, and local features, at the image patch, of at least two video frames clustered into one category are fused into a local feature, at the image patch, of one video frame in the one category. By clustering local features, similar local features can be grouped together, reducing repeated storage and improving storage efficiency. Clustered local features can better reflect common features of local regions of a video, helping the model more accurately recognize local objects and scenes in a video, thereby improving the effect of video tag recognition.

For the method and apparatus for training the video tag recognition model, device, computer-readable storage medium, and computer program product, an electronic device uses a video tag recognition model to be trained to encode each video frame in a sample video respectively, to construct a global feature set and a local feature set, and compresses the two feature sets based on feature similarity to obtain a global feature sequence and a local feature sequence of a preset storage quantity. After concatenating a first learnable query feature to be trained and a second learnable query feature to be trained, a self-attention mechanism is used to extract a self-attention feature, and a cross-attention mechanism is used to extract cross-attention features respectively. Finally, based on a difference between a video tag and video text description information of the sample video predicted based on these cross-attention features and corresponding sample labels, parameters of the video tag recognition model are adjusted. This staged training mode, in which the first stage focuses on pre-training the query transformer to enable the query transformer to better extract visual features, and the second stage jointly adjusts the query transformer and the large language model to perform training based on video tags, enables the model to better learn features of a video and improve model performance, thereby recognizing video tags more accurately in practical applications.

In the first training stage, the first cross-attention features and the second cross-attention features are concatenated and converted into a visual feature aligned with a dimension of a text feature of the sample video. A first text instruction is used as question-answering prompt information, and the visual feature is inputted into the large language model in conjunction with the question-answering prompt information to generate video text description information of the sample video. This stage focuses on training the query transformer and performing parameter adjustment on the query transformer based on video text description information, which can improve the accuracy of visual feature extraction by the query transformer, ensuring that the extracted visual features can more accurately describe main content of a video. Because the query transformer continuously learns how to associate visual features with text description information in this stage, it can more accurately extract features related to video content.

In the second training stage, the first cross-attention features and the second cross-attention features are concatenated and converted into a visual feature aligned with a dimension of a text feature of the sample video. The text feature and a second text instruction are used as question-answering prompt information, and the visual feature is inputted into the large language model in conjunction with the question-answering prompt information to generate a video tag of the sample video. In this stage, the query transformer and the large language model are jointly adjusted, and parameter adjustment is performed on the query transformer and the large language model based on video tags, ensuring that the large language model can generate more accurate video tags based on the visual features extracted by the query transformer, thereby improving the accuracy of video tags extracted by the model. Through training in this stage, the model can better combine visual features and text features, thereby recognizing video tags more accurately.

In the first training stage, based on a difference between the predicted video text description information and video text description information in the sample labels, parameters of the query transformer are updated; and in the second training stage, based on a difference between the predicted video tag and a video tag in the sample labels, parameters of the query transformer and the large language model are updated. By updating model parameters based on differences between different prediction results and sample labels in stages, the model can be gradually optimized. In the first stage, the query transformer is continuously adjusted to better extract visual features. In the second stage, the query transformer and the large language model are jointly optimized, enabling the model to recognize video tags more accurately, thereby improving model performance and the accuracy of video tag recognition.

In addition, before encoding the video to be recognized, the electronic device may select an appropriate video frame division mode based on content complexity and feature distribution of the video. If the video content is relatively simple and the feature distribution is relatively uniform, the electronic device may divide the video frames in the video to be recognized into the same number of image patches, which ensures consistency in feature extraction for each video frame and facilitates subsequent processing. For example, for some landscape videos where the picture elements do not change much, using the same number of image patches for division can efficiently extract global features and local features, reduce unnecessary computation, and improve processing efficiency. If the video content is complex and the feature distribution is uneven, the electronic device may divide the video frames in the video to be recognized in a pyramid division mode to obtain corresponding image patches, where different video frames have different numbers of image patches. Pyramid division can provide more detailed feature extraction in regions where video content changes greatly, and reduce unnecessary computation in regions where content is relatively stable. For example, for an action video containing fast-moving objects and complex scene transitions, pyramid division can better capture key features of the video, improve the accuracy of feature extraction, and thereby enhance the effect of video tag recognition.

When training the video tag recognition model, a Low-Rank Adaptation (LoRA) matrix is added for training the large language model. The LoRA is a fine-tuning technique for pre-trained models. Its main objective is to adapt to a specific task by introducing an additional low-rank matrix without modifying original model parameters, thereby reducing the resources and time required for fine-tuning. In a large language model, assuming that a weight matrix of a certain linear layer is *W*, two additional small matrices *A* and *B* are introduced in LoRA. By updating parameters of matrices *A* and *B*, the behavior of the model is effectively adjusted to meet the requirements of a specific task without changing the original weight matrix *W* of the large language model. Since the dimensions of *A* and *B* are relatively small, the number of parameters to be updated is greatly reduced, thereby reducing the resources and time required for fine-tuning. At the same time, by adjusting the value of *r*, the expressive power and computational complexity of LoRA can be controlled. Compared with a full-model fine-tuning mode, the LoRA model occupies less storage space, thus saving storage resources and improving the efficiency of model training.

Although several units or sub-units of the apparatus are mentioned in the above detailed description, such division is merely exemplary and not mandatory. In practice, according to the implementations of the present disclosure, features and functions of two or more units described above may be embodied in one unit. Conversely, features and functions of one unit described above may be further divided into a plurality of units for embodiment.

Furthermore, although the operations of the method of the present disclosure are described in a particular order in the accompanying drawings, this does not require or imply that such operations need to be performed in that particular order, or that all the operations shown need to be performed, to achieve desirable results. Additionally or alternatively, certain operations may be omitted, a plurality of operations may be combined into one operation for execution, and/or one operation may be decomposed into a plurality of operations for execution.

Those skilled in the art will understand that the embodiments of the present disclosure may be provided as a method, a system, or a computer program product. Accordingly, the present disclosure may take the form of an entirely hardware embodiment, an entirely software embodiment, or an embodiment combining software and hardware aspects. Moreover, the present disclosure may take the form of a computer program product embodied on one or more computer-usable storage media (including but not limited to a magnetic disk storage device, a CD-ROM, an optical storage device, etc.) having computer-usable computer program code embodied therein.

The present disclosure is described with reference to flowcharts and/or block diagrams of methods, apparatuses (systems), and computer program products according to embodiments of the present disclosure. Each operation and/or block in the flowcharts and/or block diagrams, and combinations of operations and/or blocks in the flowcharts and/or block diagrams, may be implemented by computer program instructions. These computer program instructions may be provided to a processor of a general-purpose computer, a special-purpose computer, an embedded processor, or other programmable data processing device to produce a machine, such that the instructions executed by the processor of the computer or other programmable data processing device produce means for implementing the functions specified in one or more operations in a flowchart and/or one or more blocks in a block diagram.

These computer program instructions may also be stored in a computer-readable memory that can direct a computer or other programmable data processing device to operate in a particular mode, such that the instructions stored in the computer-readable memory produce an article of manufacture including instruction means, which implement the functions specified in one or more operations in a flowchart and/or one or more blocks in a block diagram.

These computer program instructions may also be loaded onto a computer or other programmable data processing device, such that a series of operation operations are performed on the computer or other programmable device to produce a computer-implemented process, thereby causing instructions executed on the computer or other programmable device to provide operations for implementing the functions specified in one or more operations in a flowchart and/or one or more blocks in a block diagram.

Technical features of the foregoing embodiments may be combined in different modes to form other embodiments. To make description concise, not all possible combinations of the technical features in the foregoing embodiments are described. However, the combinations of these technical features shall be considered as falling within the scope recorded by this specification provided that no conflict exists.

The foregoing embodiments only describe several implementations of the present disclosure, which are described specifically and in detail, but cannot be construed as a limitation to the invention patent scope. A person skilled in the art may make several variations and improvements without departing from the concept of the present disclosure, which, however, still fall within the scope of protection of the present disclosure. Therefore, the scope of protection of the present disclosure shall be subject to the appended claims.

## Claims

1. A video tag recognition method, executable by an electronic device, the method comprising:
encoding, using a video tag recognition model, each video frame in a video respectively to construct a global feature set comprising global features of video frames obtained by the encoding, and a local feature set comprising local features of the video frames obtained by the encoding;
compressing, based on a global feature similarity between the global features in the global feature set, the global feature set to obtain a global feature sequence of a first preset storage quantity; and compressing, based on a local feature similarity between the local features in the local feature set, the local feature set to obtain a local feature sequence of a second preset storage quantity;
concatenating a global query feature and a local query feature, and extracting a self-attention feature using a self-attention mechanism, the global query feature and the local query feature being obtained by training learnable query features based on a sample video; and the self-attention feature fusing key information in the global query feature and the local query feature;
extracting, using a cross-attention mechanism, a first cross-attention feature between the self-attention feature and each global feature in the global feature sequence, and a second cross-attention feature between the self-attention feature and each local feature in the local feature sequence respectively; and
recognizing, based on obtained first cross-attention features and second cross-attention features, a video tag of the video.

2. The method according to claim 1, wherein the video tag recognition model comprises a query transformer; and the extracting, using the cross-attention mechanism, the first cross-attention feature between the self-attention feature and each global feature in the global feature sequence, and the second cross-attention feature between the self-attention feature and each local feature in the local feature sequence respectively comprises:
splitting the self-attention feature into a first self-attention feature corresponding to the global feature and a second self-attention feature corresponding to the local feature;
extracting, using a first cross-attention network in the query transformer and based on the cross-attention mechanism, the first cross-attention feature between the first self-attention feature and each global feature in the global feature sequence; and
extracting, using a second cross-attention network in the query transformer and based on the cross-attention mechanism, the second cross-attention feature between the second self-attention feature and each local feature in the local feature sequence.

3. The method according to claim 2, wherein the query transformer comprises a plurality of stacked decoders; for a first decoder, input features comprise the global feature sequence and the local feature sequence; for other decoders, input features comprise the first cross-attention features and the second cross-attention features outputted by a preceding decoder; and
the recognizing, based on the obtained first cross-attention features and second cross-attention features, the video tag of the video comprises:
recognizing, based on first cross-attention features and second cross-attention features outputted by a last decoder, the video tag of the video.

4. The method according to any one of claims 1 to 3, wherein the video tag recognition model comprises a large language model; the recognizing, based on the obtained first cross-attention features and second cross-attention features, the video tag of the video comprises:
concatenating the first cross-attention features and the second cross-attention features, and converting the concatenated features into a visual feature aligned with a dimension of a text feature of the video; and
using the text feature of the video and a text instruction as question-answering prompt information, which is combined with the visual feature for inputting into the large language model to generate the video tag of the video.

5. The method according to any one of claims 1 to 4, wherein each local feature corresponds to an image patch in a video frame; and the compressing, based on the feature similarity between the global features in the global feature set, the global feature set to obtain the global feature sequence of the first preset storage quantity, and the compressing, based on the feature similarity between the local features in the local feature set, the local feature set to obtain the local feature sequence of the second preset storage quantity comprises:
storing, each time a video frame is encoded, the global features of the video frame into a global memory bank, and storing the local features of the video frame into a local memory bank;
fusing, when a number of global features stored in the global memory bank reaches the first preset storage quantity, global features of at least two video frames into a global feature of one video frame based on a feature similarity between the global features stored in the global memory bank and global features of a plurality of groups of video frames among global features for storing, to adjust the global features stored in the global memory bank, wherein the number of global features is less than or equal to the first preset storage quantity; and
fusing, for each image patch, when a number of corresponding local features stored in the local memory bank reaches the second preset storage quantity, local features, at the image patch, of at least two video frames into a local feature, at the image patch, of one video frame based on a feature similarity between the local features stored in the local memory bank and local features, at the image patch, of a plurality of groups of video frames among local features to be stored, so as to adjust the local features stored in the local memory bank such that the number of local features is less than or equal to the second preset storage quantity.

6. The method according to claim 5, before the extracting, using the cross-attention mechanism, the first cross-attention feature between the self-attention feature and each global feature in the global feature sequence, and the second cross-attention feature between the self-attention feature and each local feature in the local feature sequence respectively, further comprising:
determining that a specified recognition time is reached, then reading a global feature sequence stored in the global memory bank, and reading a local feature sequence stored in the local memory bank.

7. The method according to claim 5 or 6, wherein the fusing the global features of at least two video frames into the global feature of one video frame based on the feature similarity between the global features stored in the global memory bank and global features of a plurality of groups of video frames among global features to be stored comprises:
fusing, based on a feature similarity between the global features stored in the global memory bank and global features of a plurality of groups of adjacent video frames among the global features to be stored, global features of at least one most similar group of adjacent video frames by performing average pooling on a per-group basis to obtain a global feature of one video frame in each group.

8. The method according to claim 7, wherein if the global features of the plurality of groups of adjacent video frames have global features of a plurality of most similar groups of adjacent video frames, the fusing the global features of the at least one most similar group of adjacent video frames by performing the average pooling on the per-group basis to obtain a global feature of one video frame in each group comprises:
performing average pooling on global features of a group of adjacent video frames that is most similar and comprises a global feature having a longest storage duration, among the global features of the plurality of most similar groups of adjacent video frames.

9. The method according to claim 5 or 6, wherein the fusing the global features of at least two video frames into the global feature of one video frame based on the feature similarity between the global features stored in the global memory bank and global features of a plurality of groups of video frames among global features to be stored comprises:
clustering, based on the feature similarity between the global features stored in the global memory bank and global features of a plurality of groups of video frames among global features for storing, at least some of the global features stored in the global memory bank and the global features for storing, and fusing global features of at least two video frames clustered into one category into a global feature of one video frame in the one category.

10. The method according to any one of claims 5 to 9, wherein the fusing the local features, at the image patch, of the at least two video frames into the local feature, at the image patch, of one video frame based on the feature similarity between the local features stored in the local memory bank and local features, at the image patch, of a plurality of groups of video frames among local features to be stored comprises:
fusing, based on a feature similarity between the local features stored in the local memory bank and local features, at the image patch, of the plurality of groups of adjacent video frames among the local features to be stored, local features, at the image patch, of at least one most similar group of adjacent video frames by performing average pooling on a per-group basis to obtain a local feature, at the image patch, of one video frame in each group.

11. The method according to claim 10, wherein if the local features of the plurality of groups of adjacent video frames at the image patch have local features of a plurality of most similar groups of adjacent video frames at the image patch, the fusing the local features, at the image patch, of the at least one most similar group of adjacent video frames by performing the average pooling on the per-group basis comprises:
performing average pooling, on a per-group basis, on local features, at the image patch, of at least one group of adjacent video frames that is most similar and comprises a local feature having a longest storage duration, among the local features, at the image patch, of the plurality of most similar groups of adjacent video frames.

12. The method according to any one of claims 5 to 9, wherein the fusing the local features, at the image patch, of the at least two video frames into the local feature, at the image patch, of one video frame based on the feature similarity between the local features stored in the local memory bank and local features, at the image patch, of a plurality of groups of video frames among local features to be stored comprises:
clustering, based on the feature similarity between the local features stored in the local memory bank and local features, at the image patch, of a plurality of groups of video frames among local features to be stored, at least some of the local features stored in the local memory bank and the local features to be stored, and fusing local features, at the image patch, of at least two video frames clustered into one category into a local feature, at the image patch, of one video frame in the one category.

13. A method for training a video tag recognition model, executable by an electronic device, the method comprising:
encoding, using a video tag recognition model to be trained, each video frame in a sample video respectively to construct a global feature set comprising global features of video frames obtained by the encoding, and a local feature set comprising local features of the video frames obtained by the encoding; compressing, based on a feature similarity between the global features in the global feature set, the global feature set to obtain a global feature sequence of a first preset storage quantity; and compressing, based on a feature similarity between the local features in the local feature set, the local feature set to obtain a local feature sequence of a second preset storage quantity;
concatenating a first learnable query feature to be trained and a second learnable query feature to be trained, and then extracting a self-attention feature using a self-attention mechanism, the self-attention feature fusing key information in the first learnable query feature and the second learnable query feature;
extracting, using a cross-attention mechanism, a first cross-attention feature between the self-attention feature and each global feature in the global feature sequence, and a second cross-attention feature between the self-attention feature and each local feature in the local feature sequence respectively; and
adjusting, based on a difference between a video tag and video text description information of the sample video predicted based on obtained first cross-attention features and second cross-attention features, and corresponding sample labels, parameters of the video tag recognition model, a trained video tag recognition model being configured to extract a video tag of a video.

14. The method according to claim 13, wherein the video tag recognition model comprises a large language model, and a query transformer implemented based on the self-attention mechanism and the cross-attention mechanism, the query transformer being configured to extract the first cross-attention feature and the second cross-attention feature; and the predicting, based on obtained first cross-attention features and second cross-attention features, a video tag and video text description information of the sample video comprises:
concatenating, in a first training stage, first cross-attention features and second cross-attention features, and converting concatenated features into a visual feature aligned with a dimension of a text feature of the sample video; and using a first text instruction as question-answering prompt information, and inputting the visual feature into the large language model in conjunction with the question-answering prompt information to generate the video text description information of the sample video; and
concatenating, in a second training stage, the first cross-attention features and the second cross-attention features, and converting the concatenated features into the visual feature aligned with the dimension of the text feature of the sample video; and using the text feature and a second text instruction as question-answering prompt information, and inputting the visual feature into the large language model in conjunction with the question-answering prompt information to generate the video tag of the sample video.

15. The method according to claim 14, wherein the adjusting, based on a difference between a video tag and video text description information of the sample video predicted based on obtained first cross-attention features and second cross-attention features, and corresponding sample labels, parameters of the video tag recognition model comprises:
updating, in the first training stage, parameters of the querying transformer based on a difference between the predicted video text description information and video text description information in the sample labels; and
updating, in the second training stage, parameters of the querying transformer and the large language model based on a difference between the predicted video tag and a video tag in the sample labels.

16. A video tag recognition apparatus, comprising:
an encoding and compression module, configured to encode, using a video tag recognition model, each video frame in a video to be recognized respectively to construct a global feature set comprising global features of video frames obtained by the encoding, and a local feature set comprising local features of the video frames obtained by the encoding; compress, based on a feature similarity between the global features in the global feature set, the global feature set to obtain a global feature sequence of a preset storage quantity; and compress, based on a feature similarity between the local features in the local feature set, the local feature set to obtain a local feature sequence of a preset storage quantity;
a fusion module, configured to concatenate a global query feature and a local query feature obtained by pre-training, and then extract a self-attention feature using a self-attention mechanism, the global query feature and the local query feature being obtained by training learnable query features based on a sample video; and the self-attention feature fusing key information in the global query feature and the local query feature;
a cross-compression module, configured to extract, using a cross-attention mechanism, a first cross-attention feature between the self-attention feature and each global feature in the global feature sequence, and a second cross-attention feature between the self-attention feature and each local feature in the local feature sequence respectively; and
a tag recognition module, configured to: recognize, based on obtained first cross-attention features and second cross-attention features, a video tag of the video to be recognized.

17. A video tag recognition apparatus, comprising:
a first feature extraction module, configured to encode, using a video tag recognition model to be trained, each video frame in a sample video respectively to construct a global feature set comprising global features of video frames obtained by the encoding, and a local feature set comprising local features of the video frames obtained by the encoding; compress, based on a feature similarity between the global features in the global feature set, the global feature set to obtain a global feature sequence of a preset storage quantity; and compress, based on a feature similarity between the local features in the local feature set, the local feature set to obtain a local feature sequence of a preset storage quantity;
a second feature extraction module, configured to concatenate a first learnable query feature to be trained and a second learnable query feature to be trained, and then extract a self-attention feature using a self-attention mechanism, the self-attention feature fusing key information in the first learnable query feature and the second learnable query feature;
a third feature extraction module, configured to extract, using a cross-attention mechanism, a first cross-attention feature between the self-attention feature and each global feature in the global feature sequence, and a second cross-attention feature between the self-attention feature and each local feature in the local feature sequence respectively; and
a parameter adjustment module, configured to adjust, based on a difference between a video tag and video text description information of the sample video predicted based on obtained first cross-attention features and second cross-attention features, and corresponding sample labels, parameters of the video tag recognition model, a trained video tag recognition model being configured to extract a video tag of a video to be recognized.

18. An electronic device, comprising a processor and a memory, the memory having a computer program stored therein, the computer program, when executed by the processor, causing the processor to perform operations of the method according to any one of claims 1 to 15.

19. A computer-readable storage medium, comprising a computer program, the computer program, when run on an electronic device, causing the electronic device to perform operations of the method according to any one of claims 1 to 15.

20. A computer program product, comprising a computer program, the computer program being stored in a computer-readable storage medium; and when a processor of an electronic device reads the computer program from the computer-readable storage medium, the processor executing the computer program, causing the electronic device to perform operations of the method according to any one of claims 1 to 15.
